(19) Europäisches Patentamt
European Patent Office
Office européen des brevets

(11) Publication number: **0 270 382 B1**

(12) **EUROPEAN PATENT SPECIFICATION**

(45) Date of publication of patent specification: **17.06.92**

(51) Int. Cl.5: **C02F 9/00**, C02F 1/04, C02F 1/72, B01D 53/36

(21) Application number: **87310746.0**

(22) Date of filing: **07.12.87**

(54) **Method for treating photographic processing waste solution.**

(30) Priority: **05.12.86 JP 291137/86**
**08.12.86 JP 291944/86**
**10.12.86 JP 293798/86**
**10.12.86 JP 293799/86**
**10.12.86 JP 293800/86**

(43) Date of publication of application:
**08.06.88 Bulletin 88/23**

(45) Publication of the grant of the patent:
**17.06.92 Bulletin 92/25**

(84) Designated Contracting States:
**DE FR GB IT NL**

(56) References cited:
**EP-A- 0 223 605**
**DE-A- 3 123 872**
**US-A- 3 995 298**
**US-A- 4 474 739**
**US-A- 4 640 769**

(73) Proprietor: **KONICA CORPORATION**
**26-2, Nishishinjuku 1-chome, Shinjuku-ku**
**Tokyo 160(JP)**

(72) Inventor: **Kobayashi, Kazuhiro**
**c/o KONICA CORPORATION 1, Sakuramachi**
**Hino-shi Tokyo(JP)**
Inventor: **Kurematsu, Masayuki**
**c/o KONICA CORPORATION 1, Sakuramachi**
**Hino-shi Tokyo(JP)**
Inventor: **Koboshi, Shigeharu**
**c/o KONICA CORPORATION 1, Sakuramachi**
**Hino-shi Tokyo(JP)**
Inventor: **Goto, Nobutaka**
**c/o KONICA CORPORATION 1, Sakuramachi**
**Hino-shi Tokyo(JP)**
Inventor: **Takabayashi, Naoki**
**c/o KONICA CORPORATION 1, Sakuramachi**
**Hino-shi Tokyo(JP)**

(74) Representative: **Ellis-Jones, Patrick George Armine et al**
**J.A. KEMP & CO. 14 South Square Gray's Inn**
**London WC1R 5EU(GB)**

EP 0 270 382 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method for evaporating by heating a waste solution produced in developing processing of a light-sensitive photographic material by an automatic photographic processing machine (in the present specification referred to as a photographic processing waste solution or waste solution), particularly to a method which inhibits effectively bad odors.

In recent years, as photographic processing using a so-called non-water washing automatic processing machine, which performs substantially no water washing by reduction of the amount of water used or by using stabilizing processing instead of washing, has widely spread, the amount of waste solution has been reduced to a great extent.

However, even if a relatively small scale processing, for example in processing an x-ray light-sensitive material, about 10 l per day is produced in processing light-sensitive materials for printing plates and about 50 l per day is produced in processing color light-sensitive materials. Treatment of these waste solutions causes a problem.

The present inventors have found that the evaporation method is excellent for the efficient treatment of a photographic processing waste solution with a high concentration of components (e.g. BOD: 20,000 to 30,000 ppm, $NH_4^+$: about 20,000 to 40,000 ppm) and have made various proposals (see, for example Japanese Patent Applications Nos. 259001/1985 to 259010/1985, No. 132098/1986, No. 165099/1986 and No. 165100/1986).

However there is a problem that a bad odor, for example based on sulfurous acid gas, hydrogen sulfide gas, sulfur gas, ammonia gas or amine gas, is generated, for example from the evaporated gas or the distillate. A complete process cannot be established until this problem is solved.

As a countermeasure against such bad odors, Japanese Unexamined Utility Model Publication No. 70841/1985 proposes a method in which an adsorption treatment is provided at a discharge pipe.

However, this method is based on the same technical thought as the discharging gas treatment known in the art, namely that the discharged bad odor gas is treated by adsorption at the terminal end (immediately before being discharged from the system). It is not adequate for use in small scale waste solution treatment equipment.

More specifically, bad odor gas may be generally (depending on the components) treated by adsorption equipment if the problem of condensation can be solved, but the bad odor gas concentration in the waste gas obtained by evaporation of the photographic waste solution is extremely high. When the odor gas in such a high concentration is treated by adsorption, the adsorbent soon becomes saturated. Thus the running cost becomes enormous and the adsorbent must be frequently exchanged, which is disadvantageously cumbersome. If the exchange is to be carried out less frequently, the size of the adsorption tower must be larger, causing an increase in the installation cost.

On the other hand, irradiating the evaporated gas with UV-rays or applying an ozone oxidation treatment to the distillate are known, but these techniques involve the drawbacks of high installation costs and cumbersome maintenance.

The present invention seeks to avoid the drawbacks of the prior art and to provide a method for inhibiting efficiently bad odors without bringing about cost increases and cumbersome working.

The present invention provides a method for concentrating a photographic processing waste solution containing at least thiosulfate ions by evaporation, which comprises heating the solution and adding a pH controlling agent into the solution in order to maintain the pH of the solution at from 3.0 to 11.0. The method of the present invention can be carried out in a device which comprises means for feeding the waste solution, an evaporation tank and heating means for heating the waste solution in said evaporation tank. The thiosulfate ions may, for example, be provided by ammonium thiosulfate.

Fig. 1. through Fig. 5 are each conceptional views showing examples of the method for inhibiting bad odor according to the present invention.

The present invention is based on an idea which is entirely contrary to the idea of treating the discharged bad odor gas at the terminal end as in the prior art, and provides a countermeasure against bad odor, at the generating source of the bad odor, which has not been substantially attempted in the prior art.

More specifically, photographic processing waste solutions contain a large amount of salts such as thiosulfate salt (e.g. ammonium thiosulfate), or sulfite salts (e.g. ammonium sulfite). These salts decompose as the waste solution is heated which generates bad odor components such as $H_2S$, $SO_2$, S, $NH_3$ and amines.

It is known in the art that there is a possibility that acidic components (e.g. $H_2S$, $SO_2$ and S) are released into the air as the pH of the waste solution is lowered (e.g. lowering from pH 7 to pH 4), while basic components (e.g. $NH_3$ and amines) are released into the air by increase of the pH (e.g. an increase

from pH 7 to pH 10).

However, according to the studies by the present inventors, it has been found that although acidic bad odor gases are released by a change in pH, particularly lowering the pH in the evaporation process, the amount of the bad odor gas released can be greatly reduced if the pH of the concentrate is maintained in a certain range, and also that no bad odor is formed even if the gas components which can normally cause bad odor flow into the gas. The reason why no bad odor is formed by this flow is estimated as follows. The acidic bad odor gas components discharged by a change, particularly lowering in pH, migrate towards the distillate side after gas cooling, and react with the basic components simultaneously discharged from the distillate to form, for example, salts such as ammonium sulfite. Thus no bad odor is produced from the distillate.

The present inventors have made further studies and consequently found that the release of bad odor gas components can be inhibited or no bad odor is produced even if the bad odor gas components are slightly released, provided that the waste solution (concentrate) has a pH of from 3.0 to 11.0, preferably from 4.0 to 8.0, more preferably from 5.0 to 7.0.

The process of the present invention for inhibiting bad odor by maintaining the pH of the concentrate at from 3.0 to 11.0 is now described in more detail.

Ordinarily, the pH of the waste solution depends on the type of the solution, but when it is a fixing solution containing thiosulfate ions (e.g. provided by ammonium thiosulfate) and, optionally, sulfite ions, (e.g. provided by ammonium sulfite), the pH is lower (e.g. about pH 7 to 3). When a color developing solution or a monochromatic developing solution is mixed with the above waste solution, the pH is higher (e.g. about pH 14 to 8).

These waste solutions undergo a pH change (primarily lowering) when heated in the evaporation tank. A pH controlling agent is used to control the pH change.

The pH controlling agent which can be used in the present invention is a controlling agent in the broad sense. Although it cannot be distinctly classified, it includes, for example, compounds (III) for imparting a buffering property to the waste solution against pH change, and compounds (IV) for controlling the pH (primarily elevation) by external addition against the change in pH (primarily lowering) during the evaporation process.

Examples of the compound (III) are:

(1) compounds having a buffering property by the liberation of $[OH^-]$ caused by pH lowering, such as metal oxides, metal hydroxides or metal salts of Ca, Mg, Al, Fe or Zn;

(2) compounds which are dissolved by pH lowering to exhibit alkalinity such as a solid carbonate (e.g. $CaCO_3$);

(3) buffering agents such as an organic acid (e.g. citric acid) and salts thereof;

(4) buffering agents such as an inorganic acid (e.g. boric acid or phosphoric acid) and salts thereof;

(5) chelating agents of the aminocarboxylic acid type such as EDTA; and

(6) 1-hydroxyethylidene-1,1-diphosphonic acid, One or two or more of the above can be used in combination.

Examples of the compound (IV) are:

(1) hydroxides of alkali metals or alkaline earth metals such as NaOH, KOH or $Ca(OH)_2$;

(2) carbonates;

(3) silicates (e.g. sodium silicate);

(4) phosphates;

(5) borates;

(6) alkaline earth metal salts such as Ca salts or Mg salts; and

(7) acids such as organic acids and inorganic acids (used when the pH is elevated).

One or two or more of the above can be used in combination.

Preferred pH controlling agents are carbonates, Ca salts, Mg salts and Al salts.

The compound (III) may be previously added before heating. Therefore it can be contained in the waste solution before it is fed into the evaporation tank, or alternativly it can be externally added after the waste solution is fed into the evaporation tank. The compound (IV) is of course fed externally into the evaporation tank.

The method of the present invention can be carried out in combination with at least one of the further embodiments (i) to (iv):

<u>Further embodiment (i)</u>

Sulfite ions or a compound capable of releasing sulfite ions is added to the solution during or before

heating the solution.

When the photographic processing waste solution contains amines or ammonium salts, amines or ammonia odor are generated. The thiosulfate ions contained in the waste solution are decomposed by heating at a high temperature and form $H_2S$ gas, which is sulfurized to form sulfur (S) gas, thus generating bad odor.

The amine or ammonia odor and the generation of hydrogen sulfide or sulfur gas are greatly reduced when sulfite ions exist in the waste solution.

The reason why amine or ammonia odor can be inhibited is estimated to be due to the agglomeration of amine or ammonia with sulfurous acid by steam trapping. The reason why generation of $H_2S$ or S gas is prevented is estimated to be due to the prevention of decomposition of thiosulfate ions during heating.

Further embodiment (ii)

The gas evaporated from the solution is contacted with a catalyst which is a metal (a) to (d) or a compound thereof:

(a) at least one group VIII element selected from iron, cobalt, nickel, ruthenium, rhodium, palladium, osmium, iridium and platinum;

(b) copper;

(c) zinc; and

(d) manganese.

When a photographic processing waste solution is treated by evaporation, ammonia is abundantly generated, and the ammonia odor is excessive particularly when the solution has a high pH. The bad odor is marked when thiosulfate ions ($S_2O_3^{2-}$) exist in the waste solution. Although various attempts have been made to remove this ammonia odor, the use of a catalyst has not been attempted.

Catalysts are generally used in various reactions, but they are not so positively employed in deodorizing. They are not frequently used against gases such as $SO_2$ or $H_2S$. This is because $SO_2$ and $H_2S$ lower catalytic activity, namely they act as catalyst poisons.

In the photographic processing waste solution to be treated in the present invention thiosulfate ions (e.g. provided by ammonium thiosulfate) and, optionally, sulfite ions (e.g. provided by ammonium sulfite) are present. Formation of $H_2S$ and $SO_2$ gas is normally expected in the heating process. For this reason, in the prior art, there is no example of the use of a catalyst for gas treatment.

The present inventors have unexpectedly found that there is little catalyst poison by $SO_2$ or $H_2S$, and that the catalyst can effectively decompose and inhibit bad odor gases.

The present inventors have further found that the catalyst is not poisoned and that ammonia odor can be effectively eliminated only when the specific catalysts defined above are used.

Further embodiment (iii)

A water-soluble polymer is present in the solution. The present inventors have further found that the amine and ammonia odor of the distillate and the generation of $H_2S$ or S gas can be inhibited if a water-soluble polymer is present during the heating.

Further embodiment (iv)

An oxidizing agent capable of oxidizing thiosulfate ions is present in the solution.

The present inventors have found that amine or ammonia odor can be alleviated to inhibit bad odor accompanied with $H_2S$, $SO_2$, S gas or other mercapto type gases and also the problem of turbidity accompanied with, for example, S, can be overcome by carrying out the heating and evaporation in the presence of the oxidizing agent.

It is believed that the oxidizing agent in the heated waste solution oxidizes volatile reducing components in the solution to stabilize such components. For example, thiosulfate ions are oxidized to form stable species such as $SO_4^{2-}$; thus not only are $H_2S$, $SO_2$ and S gas or other mercapto type gases not generated, but also such species react with ammonia or amines to form stabilized salts. Therefore inhibition of ammonia or amine is possible.

The present inventors have also found that when silver ions are present in the waste solution, generation of minute amounts of hydrogen sulfide, which is a particularly harmful gas, can be completely inhibited by the present invention.

The present invention is now further described with reference to the Figures.

Fig. 5 is a conceptual view of one example of the method for inhibiting bad odor according to the present invention.

In this figure, 1 is a means for feeding a photographic processing waste solution, 1A is a waste solution feeding pipe used for the feeding means 1, 2 is a preheater for preheating the photographic processing waste solution before heating, 3 is an evaporation tank, 4 is a heating means such as a heater, 5 is a vapor discharging pipe for discharging the vapor generated when the waste solution in the evaporation tank 3 is heated, 6 is a gas cooler for cooling said vapor, 7 is a fan for the gas cooler 6, 8 is a distillate tank for storing the distillate obtained by cooling the vapor, 9 is a circulating fan for returning the dehumidified gas to the evaporation tank, B is a means for feeding a pH controlling agent to the photographic processing waste solution, comprising, for example, a pH controlling agent tank 13, a pump 14, a pH controlling agent feeding pipe 15 and a pH controller pHC. TC is a temperature controller.

The waste solution is fed through the waste solution feeding pipe 1A to the evaporation tank 3 and evaporated and concentrated by the heater 4. The pH of the photographic processing solution is maintained at from 3.0 to 11.0, more preferably from 4.0 to 8.0, particularly preferably from 5.0 to 7.0.

The heating temperature is suitably controlled by the temperature controller TC.

The vapor is subjected to heat exchange with the waste solution in the preheater 2, delivered to the gas cooler 6 to be cooled and the humidity controlled, and the distillate is separated. The distillate is stored in the distillate tank 8. Since it has no bad odor and satisfies discharge water regulation values such as BOD, COD and SS, it can be discharged into, for example, rivers or reutilized if desired. The gas from which the distillate is separated has no bad odor and contains no component which causes a problem, and can therefore be discharged out of the system.

The waste water in the evaporation tank is reduced in volume by the evaporation and concentration. The heater 4 is stopped by, for example, a timer after completion of heating. The residual concentrate is discharged out of the system.

An embodiment (i) of the invention will now be further described:

Figure 1 is a conceptual view of one example of a method for inhibiting bad odor according to the present invention.

In this figure, 1, 1A, 2 to 9, 13 to 15, B, pHC and TC are as defined above in relation to Fig. 5. A is a means for feeding sulfite ions and a compound capable of releasing sulfite ions to the photographic processing waste solution, comprising a sulfite containing compound tank 10, a pump 11, and a sulfite compound feeding pipe 12.

The waste solution is fed through the waste solution feeding pipe 1A to the evaporation tank 3 and evaporated and concentrated by the heater 4. The evaporation and concentration are performed in the presence of sulfite ions and a compound capable of releasing sulfite ions.

The pH of the photographic processing solution is maintained at from 3.0 to 11.0, preferably from 4.0 to 8.0, particularly preferably from 5.0 to 7.0. The heating temperature is suitably controlled by the temperature controller TC.

The vapor is subjected to heat exchange with the waste solution in the preheater 2, delivered to the gas cooler 6 to be cooled and the humidity controlled and the distillate is separated. The distillate is stored in the distillate tank 8. Since it has no bad odor and satisfies discharge water regulation values such as BOD, COD and SS, it can be discharged into, for example, rivers or reutilized if desired. The gas from which the distillate is separated has no bad odor and contains no component which causes a problem, and can therefore be discharged out of the system.

The waste water in the evaporation tank is reduced in volume by the evaporation and concentration. The heater 4 is stopped by, for example, a timer after completion of heating. The residual concentrate is discharged out of the system.

Among photographic processing waste solutions, color developing solutions and bleach-fixing solutions contain sulfite ions, but a bleaching solution does not contain sulfite ions. Therefore, when only a bleaching solution is treated in this embodiment of the invention sulfite ions are added. Sulfite ions may also be added to the bleach-fixing solution if desired.

Even in a waste solution containing sulfite ions, the amount of sulfite ions is reduced and disappears over time. In the case of a mixed waste solution the speed of reduction is rapid and the ions disappear after storage for several days. In such case, the method of the present invention is effective.

In the present invention when the evaporation and concentration is carried out in the presence of sulfite ions, no sulfite ions need be added when the waste solution in the evaporation tank contains sulfite ions but it is preferred to add sulfite ions at the time of concentration. When the waste solution contains no sulfite ions, or when the sulfite ions in the waste solution disappear due to storage, or when they disappear during the heating process, sulphite ions are freshly added during the evaporation and concentration. Sulfite ions

and compounds capable of releasing sulfite ions may exist previously in the waste solution in the evaporation tank, or alternatively they may be added continuously or intermittently during the evaporation and concentration. They may also exist in the stored waste solution, or the waste solution may be replenished continuously or intermittently in the evaporation tank.

In the present embodiment, the sulfite ions ($SO_3^{2}$ ) may be present in the evaporation tank for example at a concentration of 5 x $10^{-4}$ gram ion/l or more, preferably 1 x $10^{-3}$ gram ion/l or more, more preferably 5 x $10^{-3}$ gram ion/l or more. Since problems such as generation of $SO_2$ gas will ensue if the amount of sulfite ions is too great, the concentration is preferably 4 gram ion/l or less, more preferably 2 gram ion/l or less, particularly preferably 0.5 gram ion/l or less.

In the present invention, the compound capable of releasing sulfite ions ($SO_3^{2-}$) is a compound which releases sulfite ions in the evaporation tank, for example by hydrolysis or heating decomposition. Examples of such a compound are:

Inorganic sulfites such as $K_2SO_3$, $Na_2SO_3$, $(NH_4)_2SO_3$, $NaHSO_3$, $KHSO_3$, $Na_2S_2O_5$ or $K_2S_2O_5$. One or two or more of these can be used. This is a compound capable of releasing $SO_3^{2-}$ primarily through hydrolysis when added to the evaporation tank.

Bisulfite addition compounds of formula (I) or (II) below; at least one compound selected from these can be used:

Formula (I)

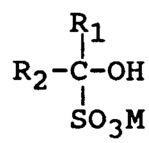

wherein $R_1$ represents a hydrogen atom or an alkyl group having from 1 to 8, preferably from 1 to 4, carbon atoms; $R_2$ represents an alkyl group having from 1 to 8, preferably from 1 to 4, carbon atoms; and M represents an alkyl metal or an ammonium group.

Preferred carbonyl bisulfite addition compounds of formula (I) are those wherein $R_1$ is a hydrogen atom and $R_2$ is an alkyl group having from 1 to 4 carbon atoms, or those wherein each of $R_1$ and $R_2$ is an alkyl group having from 1 to 4 carbon atoms.

Formula (II)

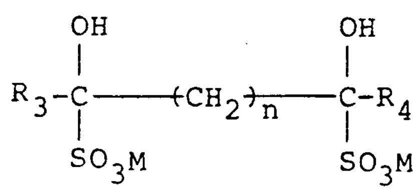

wherein $R_3$ and $R_4$ each represent a hydrogen atom or an alkyl group having from 1 to 8, preferably 1 or 2, carbon atoms; M represents an alkali metal or an ammonium group; and n represents an integer of from 0 to 6, preferably from 1 to 4.

Examples of carbonyl bis-bisulfite addition compounds of formula (II) are those wherein $R_3$ and $R_4$ are both hydrogen atoms and n is from 1 to 4 and those wherein each of $R_3$ and $R_4$ is an alkyl group having 1 or 2 carbon atoms, and n is an integer of from 1 to 4.

Specific examples of bisulfite addition compounds of formula (I) or (II) are:

| Bisulfite addition compounds of formula (I): | |
|---|---|
| I - (1) | sodium acetoaldehyde bisulfite |
| I - (2) | sodium propionaldehyde bisulfite |
| I - (3) | sodium butylaldehyde bisulfite |
| I - (4) | sodium acetone bisulfite |
| I - (5) | sodium butanone bisulfite |
| I - (6) | sodium pentanone bisulfite |

| Bisulfite addition compounds of formula (II): | |
|---|---|
| II - (1) | sodium succinic aldehyde bisbisulfite |
| II - (2) | sodium glutaraldehyde bisbisulfite |
| II - (3) | sodium $\beta$-methylglutaraldehyde bisbisulfite |
| II - (4) | sodium maleic dialdehyde bisbisulfite |
| II - (5) | sodium 2,4-pentanedione bisbisulfite |

The above bisulfite addition compounds may be used either singly or as a combination of two or more. Other compounds capable of releasing $SO_3^{2-}$ by decomposition by heating are those of formula (A):

**Formula (A)**

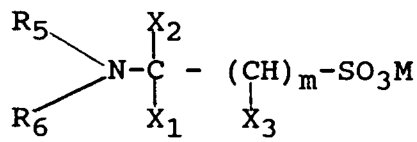

wherein $R_5$ and $R_6$ each represent a hydrogen atom, an alkyl group which may have substituent, an acyl group which may have substituent or a carbamoyl group which may have substituent; or $R_5$ and $R_6$ may, together with the nitrogen atoms to which they are attached, form a ring.

In $R_5$ or $R_6$, the alkyl group which may have substituent is preferably a substituted or unsubstituted alkyl group having from 1 to 6 carbon atoms; examples of unsubstituted alkyl groups are methyl, ethyl and butyl groups, and examples of substituted alkyl groups are alkyl groups substituted with a hydroxy group (e.g. a 2-hydroxyethyl group) and alkyl groups substituted with an alkoxy group, for example a methoxy, ethoxy, or butoxy group. Preferred acyl groups or carbamoyl groups which may have substituent are acyl groups or carbamoyl groups which have an aliphatic group or an aromatic group as the substituent; examples are unsubstituted acyl groups such as an acetyl group, or substituted acyl groups such as an aminoacetyl group (another name: glycidyl group), having an amino group as the substituent. In addition to the unsubstituted carbamoyl group, there may be included those having substituents such as a N-methylcarbamoyl group, N,N-dimethylcarbamoyl group or N,N-tetramethylenecarbamoyl group.

The ring formed by linking $R_5$ and $R_6$ is, for example, a morpholine ring, piperazine ring, or pyrrolidine ring. $R_5$ and $R_6$ are preferably each a hydrogen atom, methyl group or ethyl group, particularly preferably a hydrogen atom.

$X_1$, $X_2$ and $X_3$ each represent a hydrogen atom or an alkyl group which may have substituent.

In $X_1$ to $X_3$, the alkyl group which may have substituent is preferably a substituted or unsubstituted alkyl group having from 1 to 5 carbon atoms, for example methyl, ethyl, n-propyl, i-propyl, n-butyl, iso-butyl, sec-butyl and other unsubstituted alkyl groups, and also substituted alkyl groups having substituents such as a hydroxy group or carboxy group, including hydroxymethyl, 3-hydroxyethyl, 2-hydroxyethyl, carboxymethyl, 2-carboxyethyl, 3-carboxypropyl, 4-carboxybutyl or 2-hydroxy-4-carboxybutyl groups.

$X_1$, $X_2$ and $X_3$ are each preferably a hydrogen atom, or a methyl group, ethyl group or methyl group substituted with a hydroxy group, particularly preferably a hydrogen atom.

M represents a hydrogen atom, or an alkali metal (e.g. sodium or potassium). m is an integer of from 0 to 2, preferably 0 or 1, particularly preferably 0.

Examples of the compound of formula (A) are:

A-(1) $NH_2CH_2SO_3H$

A-(2) $NH_2CH_2CH_2SO_3H$

A-(3)

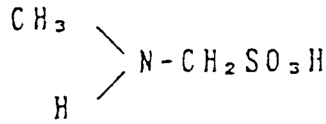

A-(4)

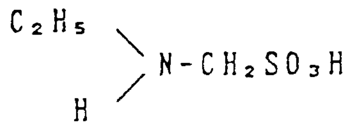

A-(5)

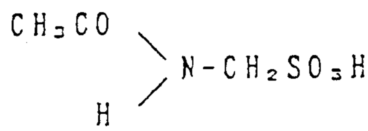

A-(6)

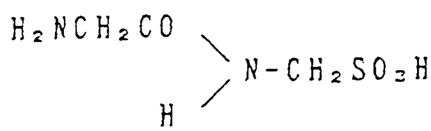

A-(7)

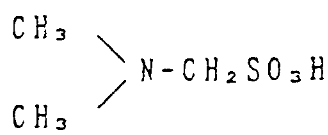

A-(8)

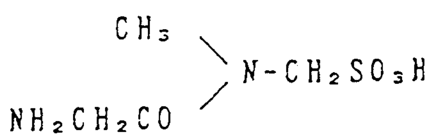

A-(9)

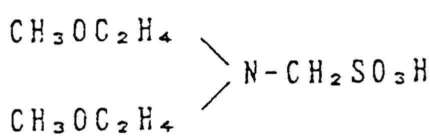

A-(10) 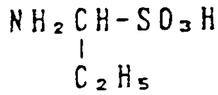

A-(11) 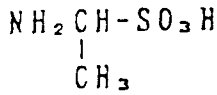

A-(12) 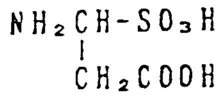

A-(13) 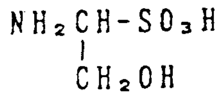

A-(14) 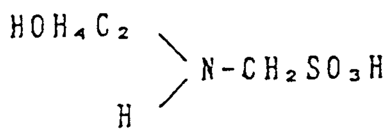

A-(15) 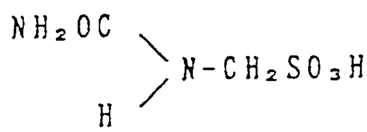

A-(16) $NH_2CH_2CH_2CH_2SO_3H$

A-(17) $CH_3-NHCH_2CH_2SO_3H$

A-(18) 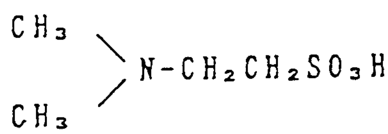

A-(19)

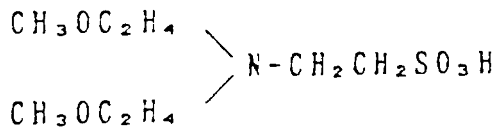

A-(20)

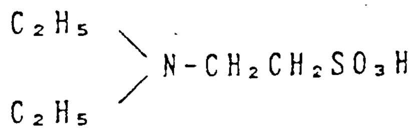

A-(21)

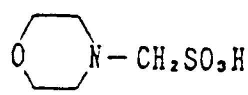

A-(22)

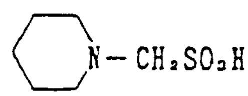

The above compounds may be added either singly or as a combination of two or more into the waste solution.

The above compounds capable of releasing $SO_3^{2-}$ may be contained in the waste solution before feeding to the evaporation tank, or may be also added externally after the waste solution is fed into the evaporation tank before initiation or after initiation of the heating.

When the above compound capable of releasing $SO_3^{2-}$ is fed externally, it may be fed by the pump 11 from the tank 10 as shown in Fig. 1, or it may also be fed by head pressure by providing the tank 10 above the evaporation tank 3 without the use of the pump 11.

When the compound capable of releasing $SO_3^{2-}$ is liquid it can be added, for example, as shown in Fig. 1, but when it is solid it may be added directly to the waste solution or to the concentrate, or it may be previously dissolved in the tank and added as shown in Fig. 1.

When two or more compounds capable of releasing $SO_3^{2-}$ are used, it is preferred to provide a plurality of tanks for the compounds when they are externally added from the tanks as shown in Fig. 1, but one tank can sometimes commonly be used depending on the physical properties of the compounds.

An embodiment (ii) of the invention will now be further described:

Fig. 2 is a conceptual view of one example of a method for inhibiting bad odor according to the present embodiment.

In Fig. 2, 1, 1A, 2 to 9, 13 to 15, A, B, pHC and TC are as defined above in relation to Fig. 5. 10 is a sulfurous acid tank. 11 and 12 are as defined above in relation to Fig. 1. 16 is a catalyst provided on the discharge passage for the evaporated gas.

The waste solution is fed through the waste solution feeding pipe 1A to the evaporation tank 3, and evaporated and concentrated by the heater 4. The pH of the waste solution on initiation of evaporation is maintained at from 3.0 to 11.0, preferably from 4.0 to 11.0, more preferably from 5.0 to 10.0. If necessary, in the waste solution, sulfite ions and/or a compound capable of releasing sulfite ions are contained. The heating temperature is suitably controlled by the temperature controller TC.

The evaporated gas is subjected to heat exchange with the waste solution in the preheater 2, delivered to the gas cooler 6 to be cooled and thereafter contacted with the catalyst 16, whereby ammonia gas is decomposed. The distillate formed by cooling is stored in the distillate tank 8. Since it has no bad odor and satisfies the water discharge regulation values such as BOD, COD and SS, it can be discharged into, for example, rivers or reutilized if desired. The gas from the distillate also has no bad odor, and contains no component which causes a problem, and can therefore be discharged without problems.

The waste solution in the evaporation tank is reduced in volume by the evaporation and concentration. The heater 4 is stopped by the timer after completion of the heating. The residual concentrate is discharged out of the system.

As the catalyst, metals as defined above in (a) to (d) or compounds thereof can be used. It is preferred to use Pt, Pd, Rh or Ir.

Examples of compounds of the above metals are oxides and chlorides, especially chloroauric acid, hexachloro-platinum, rhodium chloride and nickel formate.

Examples of catalyst carriers are ceramics, for example composed mainly of $Al_2O_3$, $SiO_2$ or $ZrO_2$.

The shape of the catalyst is not particularly limited, but a shape through which the evaporated gas is permeable is generally employed. For example the catalyst may be in honeycomb, granular, columnar or crushed form. When the shape is granular, the catalyst is preferably packed in a filling tower. In the case of the honeycomb shape, the catalyst may be coated on a honeycomb carrier.

The amount of catalyst used is determined depending on the amount of gas treated (which is proportional to the amount of waste solution) and spatial velocity. It is preferably used in an amount of from 0.5 ml to 1 l (bulk volume) per 1 l of the waste solution treated, more preferably from 1 ml to 0.1 l (bulk volume).

The contact temperature with the catalyst is preferably from 20 to 400 °C, more preferably from 50 to 350 °C, particularly preferably from 120 to 250 °C. Within this temperature range, decomposition of $NH_3$ is promoted.

The catalyst may be provided on the discharge route of the evaporated gas, either before or after the cooling of the evaporated gas, but preferably after the cooling, namely after the gas cooler 6 in the above example. It is further preferably provided in the discharge line of the dry gas after condensation since the amount of heat generated can be small. Also, the catalyst used in the present invention, as distinct from, for example, activated charcoal, can be used even when the evaporated gas contains water vapor before condensation.

In the present embodiment, in addition to the catalyst defined above, adsorption equipment conventionally used, such as that using activated charcoal or a zeolite, can be also used.

In the present invention, the pH of the waste solution on initiation of evaporation is from 3.0 to 11.0, preferably from 4.0 to 11.0, particularly from 5.0 to 10.0.

If the pH is less than 3.0, $H_2S$ and $SO_2$ will be generated although it may not have deleterious effect on the catalyst. If the pH is too high, $NH_3$ will be generated, whereby loading on the catalyst becomes too high.

An embodiment (iii) of the invention will now be further described:

Fig. 3 is a conceptual view of one example of a method for inhibiting bad odor according to the present invention.

In Fig. 3, 1, 1A, 2 to 9, 13 to 15, A, B, pHC and TC are as defined above in relation to Fig. 5. 10 is a sulfurous acid tank, 11 is a sulfurous acid pump and 12 is a sulfurous acid feeding pipe. C is a means for feeding water-soluble polymer to the photographic processing waste solution, comprising a water-soluble polymer tank 17, a water-soluble polymer pump 18 and a water-soluble polymer feeding pipe 19.

The waste solution is fed through the waste solution feeding pipe 1A into the evaporation tank 3, and evaporated and concentrated by the heater 4. The evaporation and concentration is conducted in the presence of a water-soluble polymer. During this operation, the pH of the waste solution (concentrate) is maintained at from 3.0 to 11.0, preferably at from 4.0 to 8.0, more preferably at from 5.0 to 7.0. If necessary, the waste solution contains sulfite ions and a compound capable of releasing sulfite ions as described below. The heating temperature is suitably controlled by the temperature controller TC.

The vapor is subjected to heat exchange with the waste solution in the preheater 2, delivered to the gas cooler 6 to be cooled and the humidity controlled, and the distillate is separated. The distillate is stored in the distillate tank. Since it has no bad odor and satisfies the discharge water regulation values such as BOD, COD and SS, it can be discharged into, for example, rivers or reutilized if desired. The gas separated from the distillate has no bad odor and contains no component which causes a problem, and can therefore be discharged out of the system.

The waste solution in the evaporation tank is reduced in volume by the evaporation and concentration. The heater 4 is stopped by, for example, a timer after completion of the heating. The residual concentrate is discharged out of the system.

In the present embodiment, a water-soluble polymer is present in the waste solution or the concentrate before heating.

The water-soluble polymer preferably has a polymerisation degree of from 30 to 10,000, more preferably from 100 to 5,000, most preferably from 200 to 3,000.

The amount of the water-soluble polymer used is preferably from 0.01 to 300g, more preferably from

0.05 to 100g, most preferably from 0.1 to 80g, per litre of the photographic processing waste solution.

Examples of the water-soluble polymer are compounds having OH groups or CO groups, such as:

(1) polyvinyl pyrrolidone type compounds
(2) polyvinyl alcohol
(3) gelatin
(4) cellulose compounds
(5) isobutylene-maleic anhydride copolymers

The polyvinyl pyrrolidone type compound (1) is a polymer having a pyrrolidone nucleus in the molecular structure, which may be either a homopolymer of vinyl pyrrolidone or a copolymer with another copolymerizable monomer.

Examples of monomers copolymerizable with vinyl pyrrolidone are vinyl esters, acrylic acid esters, methacrylic acid esters, acrylic acid, methacrylic acid and styrene. Examples of vinyl esters are vinyl acetate, vinyl propionate and vinyl butyrate, and examples of acrylic esters are methyl ester, ethyl ester, butyl ester and 2-ethylhexyl ester.

The copolymer ratio of these monomers is preferably from 5 to 100 mole % relative to the vinyl pyrrolidone.

The vinyl pyrrolidone polymer has an average molecular weight which is not particularly limited, but it is preferably from 500 to 800,000, more preferably from 2,000 to 400,000.

The average molecular weight of the polymer can be determined according to a conventional method, for example according to the following method:

A 1,000 g polymer sample is accurately weighed, placed in a 100 ml measuring flask and distilled water is added to prepare an aqueous 1% solution. The viscosity of the aqueous solution and water which is the solvent are measured respectively. For measurement of the viscosity, a Ubbelohde type capillary viscometer is used. With the viscometer containing the solution to be measured being suspended within a thermostat and maintained at 20 °C ± 0.01 °C for 30 minutes, the time required for the solution to pass between two gauges is measured, an average value for several times is determined and the relative viscosity is calculated from the following formula:

$$\eta\ \mathrm{rel} = \frac{\text{flowing time of solution}}{\text{flowing time of solvent}}$$

From the relative viscosity, the K value is determined from the Phikencher equation (see Physikalische U. technologische Prüfungsverfahren für Lacke and ihre Rohstoffe, 1953 Edit.) and the average molecular weight is determined in a conventional manner from the K value.

Specific examples of the vinyl pyrrolidone polymer are:

(1) polyvinyl pyrrolidone (average molecular weight: about 40,000)
(2) polyvinyl pyrrolidone (average molecular weight: about 9,000)
(3) polyvinyl pyrrolidone (average molecular weight: about 16,000)
(4) vinyl pyrrolidone - vinyl acetate copolymer (copolymer molar ratio = 7 : 3) (average molecular weight: 4,000)
(5) vinyl pyrrolidone - methyl acrylate copolymer (copolymer molar ratio = 7 : 3) (average molecular weight: 1,000)
(6) vinyl pyrrolidone - ethyl acrylate copolymer (copolymer molar ratio = 7 : 3) (average molecular weight: 25,000)
(7) vinyl pyrrolidone - butyl acrylate copolymer (copolymer molar ratio = 7 : 3) (average molecular weight: 7,000)
(8) vinyl pyrrolidone-2-ethylhexyl acrylate copolymer (copolymer molar ratio = 7 : 3) (average molecular weight: 18,000)
(9) vinyl pyrrolidone - styrene copolymer (copolymer molar ratio = 1 : 3) (average molecular weight: 20,000)

As the above polyvinyl alcohol (2), either a completely saponified product or a partially saponified product may be employed. During manufacture, when the acetyl groups in the polyvinyl acetate molecule are converted to hydroxyl groups in the saponification step, compounds in which the saponification reaction has been substantially completed are referred to as a "completely saponified product", while those in which the saponification reaction is stopped during the course of the reaction and which have acetyl groups remaining are referred to as a "partially saponified product".

The progress degree of the saponification reaction is called the "saponification degree", and is represented in "mole %".

These relationships may be represented by the following schemes:

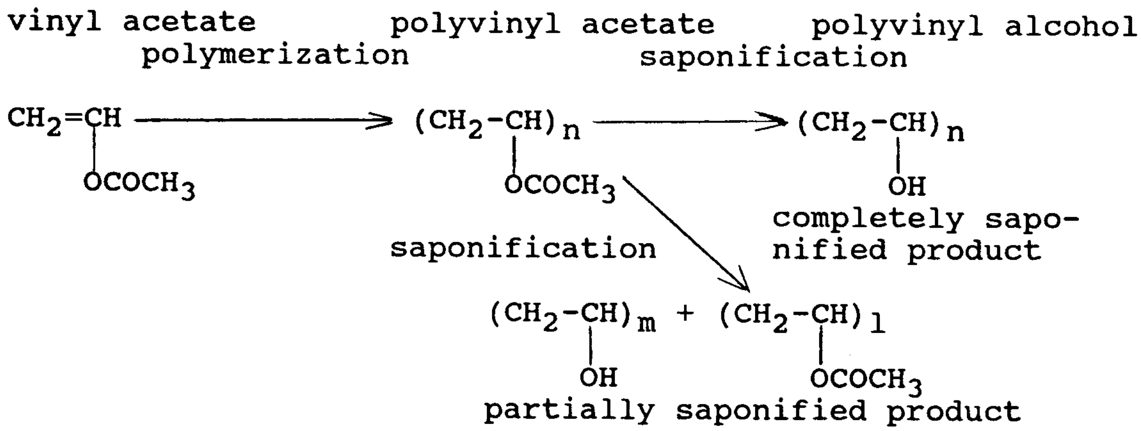


wherein n, m and l represent the polymerization degree and

$$\frac{m}{m + l} \times 100$$

represents the saponification degree.

In place of or together with the polyvinyl alcohol, a modified polyvinyl alcohol, particularly a strong acid modified polyvinyl alcohol, particularly a strong acid modified polyvinyl alcohol, a weak acid modified polyvinyl alcohol, or a partially acetalated polyvinyl alcohol may be also used.

Polyvinyl alcohols used in the invention are also available as commercial products, such as PVA105, PVA203, PVA204, PVA205, PVA405 (all produced by Kuraray Co.), GOHSENOL NL-05, GOHSENOL GL-03, GOHSENOL AL-02, GOHSERAN (all produced by Nippon Gosei Kagaku Kogyo Co.), DENKAPOVAL D-02, DENKAPOVAL B-03 (all produced by Denki Kagaku Kogyo Co.), C-25, C-20, C-201, C-17, A, C-10, C-05, MA-23, MA-17, MA-5, PA-24, PA-20, PA-18, PA-15, PA-10 and PA-05 (all produced by Shinetsu Kagaku Co.) The above marks are trade marks.

Examples of strong acid modified polyvinyl alcohols are polyvinyl alcohols modified with an aryl acid or vinyl sulfonic acid copolymer (10 % or less), examples of weak acid modified polyvinyl alcohols are carboxyl-modified polyvinyl alcohols, polyvinyl alcohols modified with acrylic acid - methacrylic acid copolymer (10% or less), and examples of partially acetalated polyvinyl alcohols are polyvinyl formal and polyvinyl butyral, (with the proviso that the acetalation degree is 15% or less, preferably 12% or less).

The above modified polyvinyl alcohols are also available as commercial products. An example of a strong acid modified polyvinyl alcohol is GOHSERAN (Trade mark - produced by Nippon Gosei Kagaku Co.), and an example of a weak acid modified polyvinyl alcohol is KL-506 (Trade mark produced by Kuraray Co.).

The gelatin (3) used in the invention comprises polypeptide chains of formula (B) shown below. The chain is formed sterically.

Formula (B)

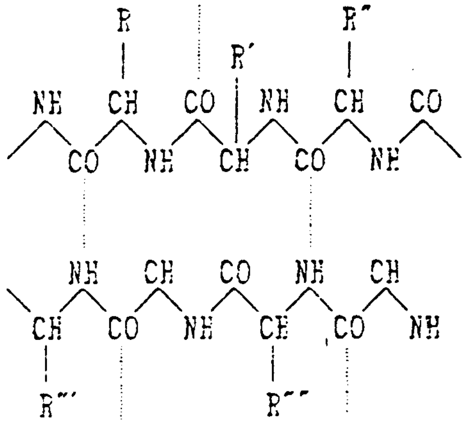

wherein R, R', R", R"' and R"" each represent an amino acid residue (e.g. glycine, alanine, isoleucine, leucine, valine, phenylalanine, tyrosine, tryptophan, serine, threonine, cystine, methionine, proline, oxyproline, lysine, oxylysine, arginine, histidine, aspartic acid, glutamic acid or amide nitrogen). The dotted lines indicate connections by a side valence. When the gelatin is in a gel state, a network structure is formed by entanglement of the chains. As the temperature is increased, the motion of single cells of the micelle is gradually increased to make the chains separate from each other.

As the gelatin to be used in the present invention, in addition to lime-treated gelatin, there may be also employed acid-treated gelatin, or enzyme-treated gelatin, as described in Bull, Soc, Sci, Phot, Japan No. 16, p.30 (1966). Hydrolyzates or enzyme decomposed products of gelatin can also be used. Examples of gelatin derivatives are those obtained by reacting various compounds such as an acid halide, acid anhydride, isocyanate, bromoacetic acid, alkanesultone, vinyl sulfonamide, maleinimide compound, polyalkylene-oxide or epoxy compound with gelatin. Examples are disclosed in, for example, U.S. Patents No. 2,614,928, No. 3,132,945, No. 3,186,846 and No. 3,312,553, U.K. Patents No. 861,414, No. 1,030,189 and No. 1,005,784, and Japanese Patent Publication No. 26845/1967.

The cellulose compounds (4) used in the invention may be, for example, cellulose esters or ethers obtained by esterification or etherification of the hydroxyl groups of cellulose ($C_6H_7O_2(OH)_3$).

Cellulose esters are derivatives having the three hydroxyl groups of cellulose appropriately esterified with acids, and higher fatty acid esters esterified with, for example, nitric, sulfuric, acetic, propionic or butyric acid, mixed esters of nitric and acetic acid and mixed esters of acetic and butyric acid.

Cellulose ethers are obtained by etherification of the hydroxyl groups of cellulose. There may be included alkyl ethers such as methyl, ethyl, or benzyl ether. For the preparation of cellulose ethers, the following method can, for example, be employed. Cellulose is converted to an alkali cellulose (mercerization), and this is reacted with, for example, an alkyl or aralkyl chloride or a sulfuric acid salt. With the progress of the reaction, the cellulose swells and decomposes, and becomes partially glued forming a viscous paste. This is purified to obtain a purified cellulose ether.

Examples of the cellulose compounds are carboxymethyl cellulose, hydroxyethyl cellulose, hydroxypropyl cellulose, methyl cellulose, ethyl cellulose, ethylhydroxyethyl cellulose and carboxymethylethyl cellulose.

Among the above cellulose compounds, hydroxypropyl cellulose of formula (C) is preferred:

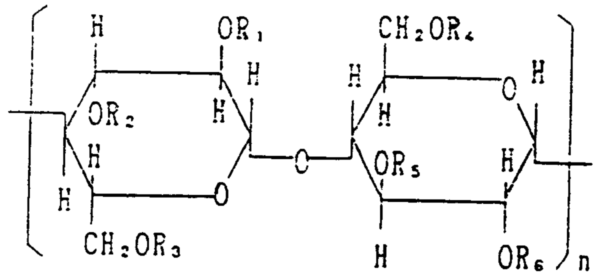

wherein $R_1$ to $R_6$ each represent a hydrogen atom, $-CH_3$, $-C_2H_5$, $-C_2H_4OH$, $(CH_2CH(CH_3)-O-)_mH$ (wherein m is an integer of 1 or more), $-CH_2COOH$, $-CH_2COOCH_3$, $-CH_2COOC_2H_5$, $-C_2H_4OC_2H_5$; and n is a positive integer.

The isobutylene - maleic anhydride copolymer (5) used in the present invention is of formula (D):

Formula (D)

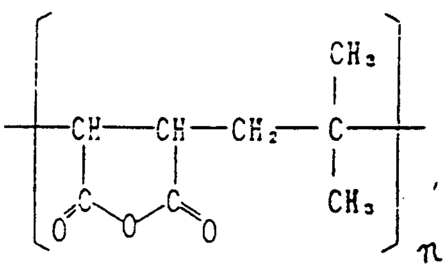

wherein n is a positive integer.

The above compounds (1) to (5) may be used either individually in the waste solution, or two or more may be added in combination.

The water-soluble polymer used in the present invention may be present in the waste solution before it is fed into the evaporation tank 3, or alternatively after it is fed into the evaporation tank, or it may be added externally before initiation of the heating or after initiation of the heating. Furthermore the water-soluble polymer may be present in the evaporation tank before the photographic processing waste solution is fed thereinto.

When the water-soluble polymer is externally fed, as shown in Fig. 3, it may be fed from the tank 16 by the pump 17, or it may be fed by head pressure by providing the tank 16 above the evaporation tank 3 without use of the pump 17.

When the water-soluble polymer is a liquid it can be added, for example, as shown in Fig. 3, but when it is a solid it may be added directly to the waste solution or to the concentrate, or it may be added as shown in Fig. 3 dissolved previously in a tank.

When two or more water-soluble polymers are used and when they are externally added from a tank as shown in Fig. 3, it is preferred to provide a plurality of tanks for the compounds, but depending on the physical properties of the compounds, one tank can be used commonly for a plurality of compounds in some cases.

An embodiment (iv) of the invention will now be further described:

Fig. 4 is a conceptual view of one example of a method for inhibiting bad odor according to the present invention.

In Fig. 4, 1, 1A, 2 to 9, 13 to 15, B and pHC are as defined in relation to Fig. 5. D is a means for feeding the oxidizing agent to the photographic processing waste solution, comprising an oxidizing agent dissolving tank 20, an oxidizing agent feeding pump 21 and an oxidizing agent feeding pipe 22.

The waste solution is fed through the waste solution feeding pipe 1A to the evaporation tank 3, where the oxidizing agent is added. The mixture is evaporated and concentrated by the heater 4. During this operation, the pH of the waste solution (concentrate) is maintained at from 3.0 to 11.0, preferably at from 4.0 to 8.0, more preferably at from 5.0 to 7.0.

The heating temperature is suitably controlled by the temperature controller TC.

The vapor is subjected to heat exchange with the waste solution in the preheater 2, delivered to the gas cooler 6 to be cooled and the humidity controlled, and the distillate is separated. The distillate is stored in the distillate tank 8. Since it has no bad odor and satisfies the discharge water regulation values such as BOD, COD and SS, it can be discharged into, for example, rivers or reutilized if desired. The gas from which the distillate is separated has no bad odor and contains no component which causes a problem, and can therefore be discharged out of the system.

The waste solution in the evaporation tank is reduced in volume by the evaporation and concentration. The heater 4 is stopped by, for example, a timer after completion of the heating. The residual concentrate is discharged out of the system.

As the oxidizing agent used in the invention, there may be included:

(1) at least one peroxide;

(2) at least one halogenic acid; and

(3) at least one metal oxide.

Examples of peroxides (1) are persulfates such as sodium persulfate, potassium persulfate and ammonium persulfate; hydrogen peroxide; peroxomonosulfates such as sodium peroxomonosulfate, potassium peroxomonosulfate and ammonium peroxomonosulfate; percarbonates such as potassium percarbonate and sodium percarbonate; ammonium perborate, potassium perborate, sodium perborate, magnesium perborate, benzoyl peroxide, peracetic acid, calcium peroxide, sodium peroxide, barium peroxide, manganese and lithium peroxide. At least one from among these can be used.

Examples of halogenic acids (2) are perchloric acid, potassium perchlorate, sodium perchlorate, barium perchlorate, magnesium perchlorate, potassium chlorate, sodium chlorate, potassium bromate, potassium iodate, potassium hydrogen iodate and sodium iodate. At least one from among these can be used.

Examples of metal oxides (3) are $Fe_2O_3$, $Fe_3O_4$, FeO, ZnO, NiO, CuO, $MnO_2$, $KMnO_4$, $Cu_2O$, $Pb_3O_4$, SnO, $Bi_2O_3$, CoO, $Cr_2O_3$, $K_2Cr_2O_7$, $KCrO_4$, $Ce_2O_3$, $TiO_2$ and $ZrO_2$. At least one from among these can be used. Among the oxidizing agents, peroxide oxidizing agents are preferred.

The amount of the oxidizing agent added in the present invention is preferably from 0.001 to 2 mol/l, more preferably from 0.005 to 1 mol/l, particularly preferably from 0.01 to 0.5 mol/l.

The oxidizing agent may be added previously to the waste solution to be fed into the concentration tank, or it may be also added after the waste solution is fed into the concentration tank. When it is to be added in the concentration tank, it may be added either before or after initiation of the evaporation and concentration.

When the oxidizing agent is externally added to the concentration tank, a means for feeding it is used. When the oxidizing agent is liquid, it may be added separately from the waste solution from the oxidizing agent dissolving tank 10 by the use of an oxidizing agent feeding pump 11 as shown in Fig. 4. On the other hand, when the oxidizing agent is a solid such as a powder it may be added directly into the concentration tank, or alternatively it may be also added after being dissolved in the tank 10 shown in Fig. 4.

When two or more oxidizing agents are employed and externally added from the tank as shown in Fig. 4, it is preferred to provide a plurality of tanks for the oxidizing agents, but one tank may sometimes be commonly used depending on the physical properties of the oxidizing agents.

In the present invention, when the pH controlling agent is externally fed, it may be fed from the pH controlling agent tank 13 as shown in Fig. 5 or alternatively it may be fed by head pressure by providing the tank 13 above the evaporation tank 3 without the use of the pH controlling agent pump 14.

When the pH controlling agent is liquid it can be added as shown in Fig. 1, but when it is solid it may be added directly into the waste solution or the concentrate, or it may be previously dissolved in the tank before addition as shown in Fig. 5.

When two or more pH controlling agents are added externally from the tank as shown in Fig. 5, it is preferred to provide a plurality of tanks for the compounds added, but one tank can sometimes be commonly used depending on the physical properties of the compounds.

When the pH controlling agent is externally added as shown in Fig. 5, the means for feeding the pH controlling agent are preferably actuated based on control signals provided by means for detecting the pH of the waste solution and the concentrate in the evaporation tank. For example, it is preferred to control the amount added depending on the signal from the pH controller. Specifically, when the pH in the evaporation tank is lowered after the evaporation and concentration has started, the pump 13 can be turned on by the signal from the controller to feed in the pH controlling agent. When the pump 13 is a stroke controlling system, the stroke can be also automatically controlled.

When the pH in the evaporation tank 3 has a correlation with, for example, the lapse of time during the evaporation and concentration and amount of heating, no such pH detection means as described above

need be provided.

As described above, when the pH of the concentrate is maintained at from 3.0 to 11.0, the content of bad odor components in the evaporated gas is small. Therefore even if such components are released, they will migrate to the liquid side after cooling, so that the bad odor is avoided through the adequate composition balance between the acidic components and the basic components in the distillate.

To inhibit effectively the bad odor in the present invention, it is preferred to control the heat content supplied from the heater 4 to the evaporation tank 3. More specifically, when the heat content applied per unit time is increased, thiosulfates are crystallized before decomposition, whereby bad odor can be inhibited without being released externally. On the contrary if the heat content applied is small, decomposition will be promoted which increases the flow-out of the substances which cause bad odor.

To inhibit effectively bad odor in the present invention, it is preferred to incorporate compounds of formulae (V) to (VIII) in the waste solution before heating or during heating:

Formula (V)

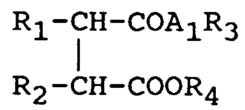

wherein one of $R^1$ and $R_2$ represents a hydrogen atom, and the other represents a group of formula: $-SO_3M$ (wherein M represents a hydrogen atom or a monovalent cation); $A_1$ represents an oxygen atom or a group of formula: $-NR_5-$ (wherein $R_5$ represents a hydrogen atom or an alkyl group having from 1 to 8 carbon atoms); and $R_3$ and $R_4$ each represent an alkyl group having from 4 to 16 carbon atoms, the alkyl group represented by $R_3$, $R_4$ or $R_5$ optionally being substituted with a fluorine atom.

Formula (VI)

$A_2-O-(B)_m-X_1$

wherein $A_2$ represents a monovalent organic group such as an alkyl group having from 6 to 20, preferably from 6 to 12 carbon atoms (e.g. a hexyl, heptyl, octyl, nonyl, decyl, undecyl or dodecyl group), or an aryl group, for example a phenyl, tolyl, xylyl, biphenyl or naphthyl group, preferably a phenyl or tolyl group, substituted in the ortho, meta or para position with an alkyl group having from 3 to 20 carbon atoms, preferably from 3 to 12 carbon atoms (e.g. a propyl, butyl, pentyl, hexyl, heptyl, octyl, nonyl, decyl, undecyl or dodecyl group); B represents ethylene oxide or propylene oxide; m represents an integer of from 4 to 50; and $X_1$ represents a hydrogen atom, $SO_3Y$ or $PO_3Y_2$, wherein Y represents a hydrogen atom, an alkali metal atom (e.g. Na, K or Li) or an ammonium ion.

Formula (VII)

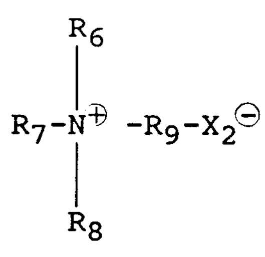

wherein $R_6$, $R_7$, $R_8$ and $R_9$ each represent a hydrogen atom, an alkyl group or a phenyl group with the proviso that the total number of carbon atoms in $R_6$, $R_7$, $R_8$ and $R_9$ is from 3 to 50; and $X_2^{\ominus}$ represents an anion such as a halogen atom, hydroxyl group, sulfate group, carbonate group, nitrate group, acetate group or p-toluenesulfonate group.

Formula (VIII)

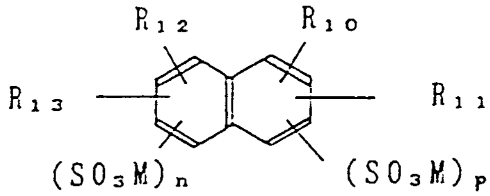

wherein $R_{10}$, $R_{11}$, $R_{12}$ and $R_{13}$ each represent a hydrogen atom or an alkyl group; M is as defined in formula (V); and n and p each represent O or an integer of from 1 to 4 such that $1 \leqq n + n \leqq 8$.

Examples of compounds of formulae (V) to (VIII) are:

Compounds of formula (V):

(1)

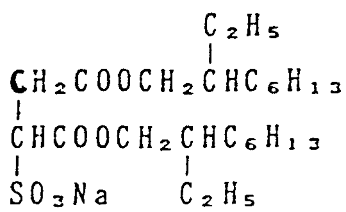

(2)

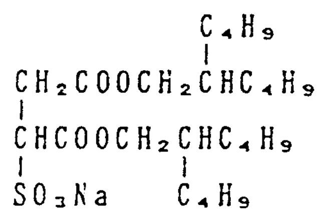

(3)

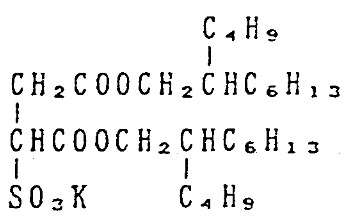

(4)

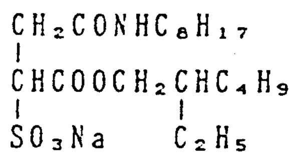

(5)

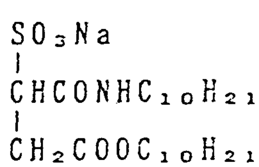

(6)

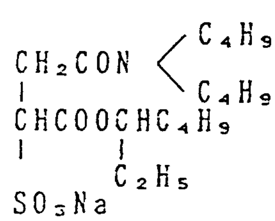

(7)

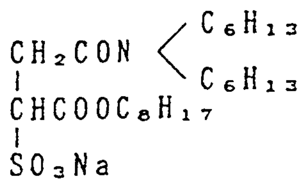

(8)

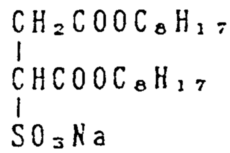

(9)

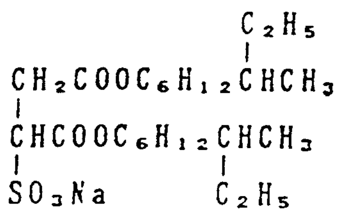

(10)

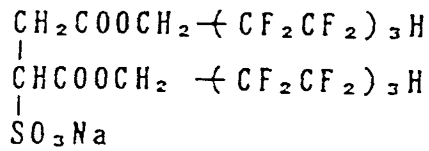

(11)

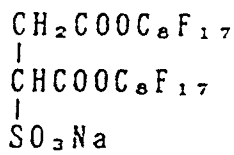

(12)

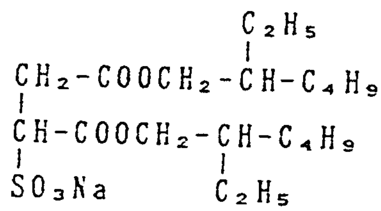

Compounds of formula (VI):

(13) $C_{12}H_{25}O(C_2H_4O)_{10}H$

(14) $C_8H_{17}O(C_3H_6O)_{15}H$

(15) $C_9H_{19}O(C_2H_4O)_4SO_3Na$

(16) $C_{10}H_{21}O(C_2H_4O)_{15}PO_3Na_2$

(17)

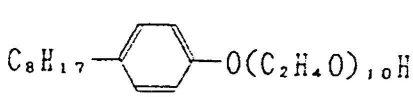

(18) 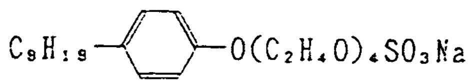

(19) 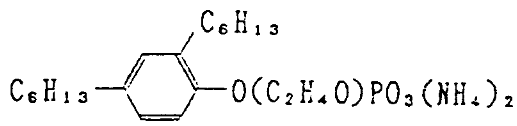

(20) 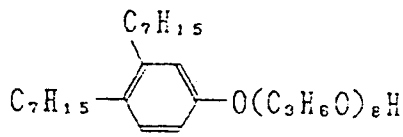

(21) 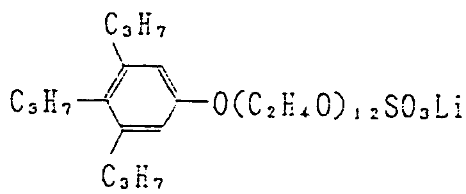

(22) 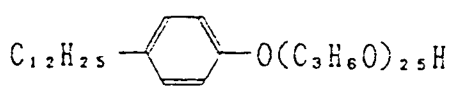

(23) 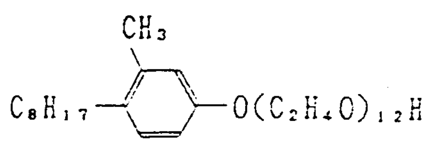

(24) 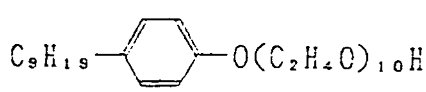

Compounds of formula (VII):

(25) 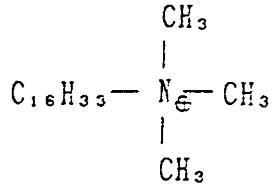 $Cl^{\ominus}$

(26) 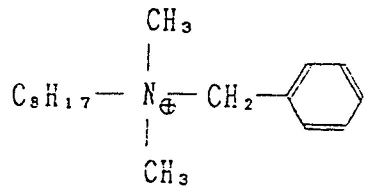 $Cl^{\ominus}$

(27) 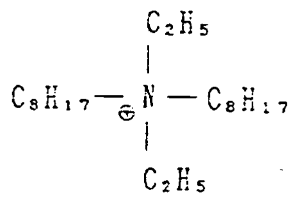 $Br^{\ominus}$

(28) 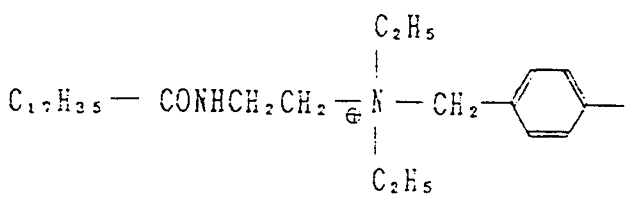 $Cl^{\ominus}$

(29) 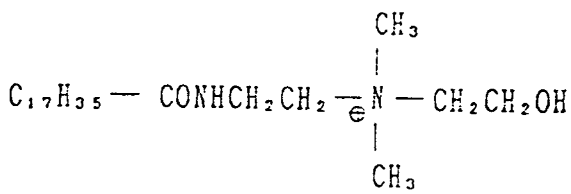 $NO_3^{\ominus}$

(30) 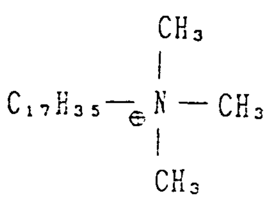 $Br^{\ominus}$

(31) 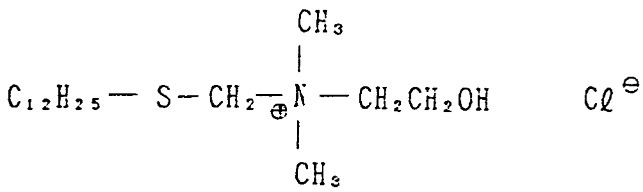

(32) 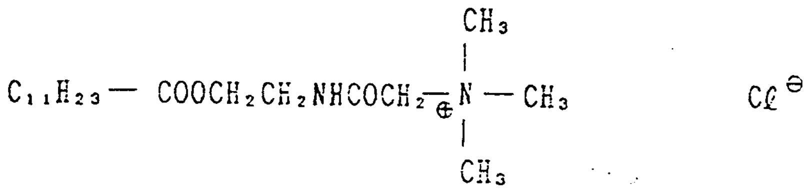

(33) 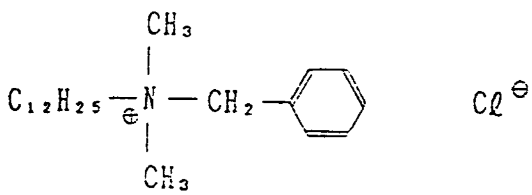

(34) 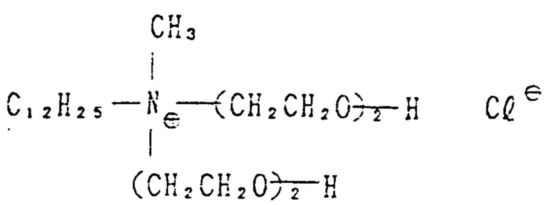

Compounds of formula (VIII):

(35) 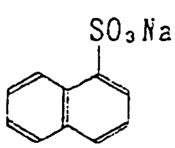

(37) 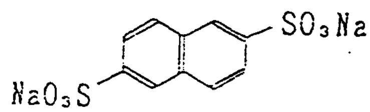

(36) 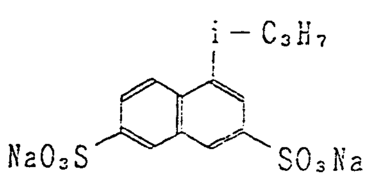

(38) 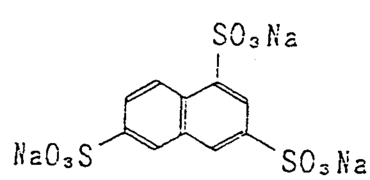

(39) 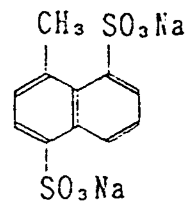

(41) 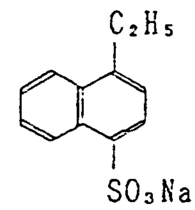

(40) 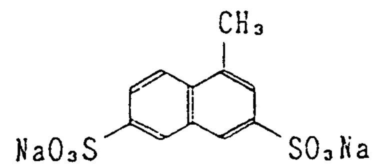

(42) 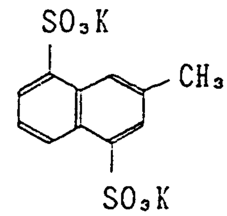

Further embodiments of the present invention include features shown below and described in, for example, Japanese Patent Application Nos. 259001/1985 to 259010/1985, Japanese Patent Application No. 132098/1986, Japanese Patent Application No. 165099/1986 and Japanese Patent Application No. 165100/1986.

(1) The concentration of thiosulfate ions in the waste solution is preferably from 5 to 500 g/ℓ in the case of ammonium thiosulfate. As the kind of the waste solution, there may be included, for example, mixed waste solutions of a color developing solution with a bleach-fixing solution or stabilizing solution, or a waste solution such as a bleach-fixing solution or fixing solution alone may be included. The present invention works particularly effectively when silver ions are contained in the waste solution. The silver ion concentration is preferably from 0.01 to 50 g/ℓ.

The method of the present invention is preferably applied to the treatment of a small volume of waste solution, such as that obtained from a non-water washing automatic processing machine. Here, a small volume is used as a concept contrasted to the amount of waste water used in factory of large volume. While it is not particularly limited in numerical value, it may be, for example, about 1 ℓ/D to 1,000 ℓ/D.

(2) In the present invention, as the means for feeding the waste solution to the evaporation tank 3, there may be included pumping the solution from a waste solution tank not shown in the figures, utilizing head pressure, or manual feeding.

Feeding of the waste solution may be done continuously or discontinuously, which is determined depending on whether the evaporation treatment is continuous or batchwise.

The waste solution may be fed as liquid, but it may be also fed as a spray.

(3) The evaporation tank 3 is a tank which reduces the amount of the waste solution to be discarded by heating the waste solution fed thereto to evaporate a part thereof and concentrate the waste solution. In the present specification, concentration means reduce the waste solution volume after evaporation generally to 1/4 or less of the volume before evaporation, preferably 1/5 or less, most preferably 1/10. The present invention is also applicable in the case in which all of the waste solution (including substantially all) is evaporated to dryness.

The form of the evaporation tank 3 is not particularly limited, but it is preferable that it is formed in a double structure of an outer tank (outer kettle) and an inner tank (inner kettle), with the inner tank being, for example, detachably formed with a resin bag. At the outer circumference of the evaporation tank 3, a heat insulating material (e.g. a glass wool mat) is preferably provided. At the upper part of the evaporation tank, it is preferable to provide a hinged opening and closing lid.

(4) In the present invention, the heating means is not particularly limited; a heater heating system is employed as one example in Fig. 1. Heaters may include, for example, electric heating heaters, quartz tube built-in nichrome wire heaters or ceramic heaters. These are preferably provided internally in the evaporation tank as shown in Figure 1. Other than heaters, it is also possible to employ a direct fire or induction heating system such as microwave irradiation; these may also be used in combination.

Heating by a heater may, for example, be stopped by actuation of a timer. Alternatively the liquid surface of the concentrate may be detected by a level sensor, and heating may be stopped by said

detected signal.

(5) The evaporated gas is cooled by, for example, a gas cooler 6, but the cooling means may be any desired one; it is not an essential requirement for accomplishing the object of the present invention to effect compulsory cooling. The distillate may also be formed by natural cooling. The distillate may be discarded.

In the present invention, after cooling, there is no problem of odor, and yet a distillate containing ammonium salts such as ammonium sulfite, can be obtained. It can be reutilized as, for example, fertilizer, or as a photographic processing solution (e.g. water for dissolving the replenishing solution or washing water) in the automatic processing machine.

(6) The gas after cooling and humidity control has an almost undetectable odor. For further complete removal of the bad odor, it is preferable to use an adsorbent such as activated charcoal. By doing so, the present invention is excellent in that there is no problem as in the treatment of highly concentrated bad odor gas in the prior art (for example, rapid saturation or cumbersome exchange operations). The pH controlling means effectively functions as a pretreatment for prevention of odor.

## EXAMPLES

### Example 1

The following experimental examples were carried out using the photographic processing waste solution shown below.

(Negative film processing)

SR-V100 negative film (produced by Konishiroku Photo Industry Co., Ltd.) after exposure was continuously processed in the following processing steps using the following processing solutions.

| Processing step | | |
|---|---|---|
| | Processing temperature | Processing time |
| Color developing | 38 °C | 3 min 15 s |
| Bleaching | 38 °C | 3 min 15 s |
| Fixing | 38 °C | 3 min 15 s |
| First tank for first stabilization | 32 °C - 38 °C | 1 min |
| Second tank for first stabilization | 32 °C - 38 °C | 1 min |
| Second stabilization | 38 °C | 1 min |
| Drying | 45 °C - 65 °C | |

| [Color developing solution] | |
|---|---|
| Potassium carbonate | 30 g |
| Sodium hydrogen carbonate | 2.5 g |
| Potassium sulfite | 5 g |
| 1-Hydroxyethylidene-1,1-diphosphonic acid (60 %) | 1.0 g |
| Sodium bromide | 1.3 g |
| Potassium iodide | 2 mg |
| Hydroxylamine sulfate | 2.5 g |
| Sodium chloride | 0.6 g |
| 4-Amino-3-methyl-N-ethyl-N-(β-hydroxylethyl)aniline sulfate | 4.8 g |
| Potassium hydroxide | 1.2 g |
| made up to 1 ℓ with water, and adjusted to pH 10.06 with potassium hydroxide or 20 % sulfuric acid. | |

| [Color developing replenishing solution] | |
|---|---|
| Potassium carbonate | 40 g |
| Sodium hydrogen carbonate | 3 g |
| Potassium sulfite | 7 g |
| Sodium bromide | 0.9 g |
| 1-Hydroxyethylidene-1,1-diphosphonic acid (60 %) | 1.2 g |
| Hydroxylamine sulfate | 3.1 g |
| 4-Amino-3-methyl-N-ethyl-N-(β-hydroxylethyl)aniline sulfate | 6.0 g |
| Potassium hydroxide | 2 g |
| made up to 1 ℓ with water, and adjusted to pH 10.12 with potassium hydroxide or 20 % sulfuric acid. | |

| [Bleaching solution] | |
|---|---|
| Iron ammonium ethylenediaminetetraacetate | 160 g |
| Disodium ethylenediaminetetraacetate | 10 g |
| Ammonium bromide | 150 g |
| Glacial acetic acid | 10 mℓ |
| made up to 1 ℓ with water, and adjusted to pH 5.8 with ammonia water or glacial acetic acid. | |

| [Bleaching replenishing solution] | |
|---|---|
| Iron ammonium ethylenediaminetetraacetate | 170 g |
| Disodium ethylenediaminetetraacetate | 12 g |
| Ammonium bromide | 178 g |
| Glacial acetic acid | 21 mℓ |
| made up to 1 ℓ with water, and adjusted to pH 5.6 with ammonia water or glacial acetic acid. | |

| [Fixing solution] | |
|---|---|
| Ammonium thiosulfate | 150 g |
| Anhydrous sodium bisulfite | 12 g |
| Sodium metabisulfite | 2.5 g |
| Disodium ethylenediaminetetraacetate | 0.5 g |
| Sodium carbonate | 10 g |
| made up to 1 ℓ with water, and adjusted to pH 7.0 with ammonia water or glacial acetic acid. | |

| [Fixing replenishing solution] | |
|---|---|
| Ammonium thiosulfate | 300 g |
| Anhydrous sodium bisulfite | 15 g |
| Sodium metabisulfite | 3 g |
| Disodium ethylenediaminetetraacetate | 0.8 g |
| Sodium carbonate | 14 g |
| made up to 1 ℓ with water, and adjusted to pH 7.5 with ammonia water or glacial acetic acid. | |

| [First stabilizing solution and first stabilizing replenishing solution] | |
|---|---|
| 5-Chloro-2-methyl-4-isothiazoline-3-on<br>2-Octyl-4-isothiazoline-3-on<br>Ethylene glycol | 0.02 g<br>0.02 g<br>1.0 g |
| made up to 1 ℓ with water, and adjusted to pH 7.0 with 20 % sulfuric acid. | |

| [Second stabilizing solution and second stabilizing replenishing solution] | |
|---|---|
| Formalin (37 % aqueous solution)<br>KONIDAX (produced by Konishiroku Photo Industry Co., Ltd.) | 2 mℓ<br>5 mℓ |
| made up to 1 ℓ with water. | |

The color developing replenishing solution was replenished in an amount of 13.5 mℓ per 100 $cm^2$ of color negative film in the color developing bath, the bleaching replenishing solution in an amount of 5.5 mℓ per 100 $cm^2$ of color negative film in the bleaching bath, the fixing replenishing solution in an amount of 8 mℓ per 100 $cm^2$ of color negative film in the fixing bath, the first stabilizing replenishing solution in an amount of 8 mℓ per 100 $cm^2$ of color negative film in the first stabilizing bath and the second stabilizing replenishing solution in an amount of 150 mℓ per 100 $cm^2$ of color negative film in the second stabilizing bath.

(Paper processing)

Subsequently, Sakura color-SR paper (produced by Konishiroku Photo Industry Co., Ltd.) after picture printing was continuously processed using the following processing steps and processing solutions.

| Standard processing step | | |
|---|---|---|
| (1) Color developing | 38 °C | 3 min 30 s |
| (2) Bleach-fixing | 38 °C | 1 min 30 s |
| (3) Stabilizing pressing | 25 °C - 35 °C | 3 min |
| (4) Drying | 75 °C -100 °C | about 2 min |

Processing solution compositions

| [Color developing tank solution] | |
|---|---|
| Benzyl alcohol | 15 mℓ |
| Ethylene glycol | 15 mℓ |
| Potassium sulfite | 2.0 g |
| Potassium bromide | 1.3 g |
| Sodium chloride | 0.2 g |
| Potassium carbonate | 24.0 g |
| 3-Methyl-4-amino-N-ethyl-N-(β-methanesulfonamidoethyl)aniline sulfate | 4.5 g |
| Fluorescent brightener (4,4'-diaminostylbenedisulfonic acid derivative) (tradename KEICOL PK-CONC, Produced by Shin-nissei Kako Co.) | 1.0 g |
| Hydroxylamlne sulfate | 3.0 g |
| 1-Hydroxyethylidene-1,1-diphosphonic acid | 0.4 g |
| Hydroxyethyliminodiacetic acid | 5.0 g |
| Magnesium chloride•6 hydrate | 0.7 g |
| 1,2-hydroxybenzene-3,5-disulfonic acid -disodium salt | 0.2 g |
| made up to 1 ℓ with water, adjusted to pH 10.20 with potassium hydroxide and sulfuric acid. | |

| [Color developing replenishing solution] | |
|---|---|
| Benzyl alcohol | 20 mℓ |
| Ethylene glycol | 20 mℓ |
| Potassium sulfite | 3.0 g |
| Potassium carbonate | 30.0 g |
| Hydroxylamine sulfate | 4.0 g |
| 3-Methyl-4-amino-N-ethyl-N-(β-methanesulfonamidoethyl)aniline sulfate | 6.0 g |
| Fluorescent brightener (4,4'-diaminostylbenedisulfonic acid derivative) (tradename KEICOL PK-CONC, Produced by Shin-nissei Kako Co.) | 2.5 g |
| 1-Hydroxyethylidene-1,1-diphosphonic acid | 0.5 g |
| Hydroxyethyliminodiacetic acid | 5.0 g |
| Magnesium chloride•6 hydrate | 0.8 g |
| 1,2-hydroxybenzene-3,5-disulfonic acid -disodium salt | 0.3 g |
| made up to 1 ℓ with water, adjusted to pH 10.70 with potassium hydroxide. | |

| [Bleach-fixing tank solution] | |
|---|---|
| Ferric ammonium ethylenediaminetetraacetate dihydrate | 60.0 g |
| Ethylenediaminetetraacetic acid | 3.0 g |
| Ammonium thiosulfate (70 % solution) | 100.0 mℓ |
| Ammonium sulfite (40 % solution) | 27.5 mℓ |
| the total amount was made up to 1 ℓ with water, and the pH was adjusted to 7.1 with potassium carbonate or glacial acetic acid. | |

| [Bleach-fixing replenishing solution A] | |
|---|---|
| Ferric ammonium ethylenediaminetetraacetate dihydrate<br>Potassium carbonate | 260.0 g<br>42.0 g |
| the total amount was made up to 1 ℓ with water.<br>This solution has a pH of 6.7 ± 0.1. | |

| [Bleach-fixing replenishing solution B] | |
|---|---|
| Ammonium thiosulfate (70 % solution)<br>Ammonium sulfite (40 % solution)<br>Ethylenediaminetetraacetic acid<br>Glacial acetic acid | 500.0 mℓ<br>250.0 mℓ<br>17.0 g<br>85.0 mℓ |
| the total amount was made up to 1 ℓ with water.<br>This solution has a pH of 5.3 ± 0.1. | |

| [Washing-substitutive stabilizing tank solution and its replenishing solution] | |
|---|---|
| Ethylene glycol<br>1-Hydroxyethylidene-1,1-diphosphonic acid (60 % aqueous solution)<br>Ammonia water (25 % aqueous ammonium hydroxide solution) | 1.0 g<br>1.0 g<br>2.0 g |
| made up to 1 ℓ with water, and adjusted to pH 7.0 with sulfuric acid. | |

An automatic processing machine was filled with the above color developing tank solution, the bleach-fixing tank solution and the stabilizing tank solution, and a running test was performed while replenishing the color developing replenishing solution, the bleach-fixing replenishing solutions A, B and the stabilizing replenishing solution through quantitating cups at three minute intervals while processing the above Sakura color-SR paper sample. The replenished amounts were 190 mℓ as the replenishing amount in the color developing tank, 50 mℓ as the replenished amount for each of the bleach-fixing replenishing solutions A, B in the bleach-fixing tank and 250 mℓ as the replenished amount for the replenishing solution for washing substitutive stabilizing solution in the stabilizing tank, per 1 $m^2$ of the color paper. The stabilizing tank in the automatic developing machine was a multi-tank countercurrent system comprising first to third tanks in the direction of the flow of sample. Replenishment was conducted from the final tank, the overflowed solution from the final tank flowed into the tank in the proceeding stage, and the overflowed solution therefrom flowed into the first tank.

Continuous treatment was performed until the total replenished amount of the washing-substitutive stabilizing solution was three times the stabilizing tank volume.

All of the photographic processing waste solutions produced by the above processing were mixed together and the following treatment was applied thereon:

Experimental example 1

After the above photographic processing waste solution was stored for 5 days, the $SO_3^{2-}$ concentration was determined by iodometory as 4.5 x $10^{-4}$ gram ion/ℓ. The pH was 8.0. 5 liters of this solution were placed in the device shown in Fig. 1, and an evaporation treatment was performed.

Evaporation and concentration were performed to 2.5 ℓ, and the evaporated gas was cooled to obtain a distillate.

When the temperature of the distillate was 25 °C, $NH_3$ gas, $H_2S$ gas and $SO_2$ gas on the surface of the distillate were quantitatively determined, and the appearance of the distillate was examined. The results are shown in Table 1.

Next, sodium sulfite was added, and the same experiment was repeated varying the sulfite ion ($SO_3^{2-}$) concentration in the waste solution as shown in Table 1. The results are also shown in Table 1.

After initiation of the evaporation and concentration, the $SO_3^{2-}$ concentration was controlled to the initial

concentration after each 500 ml evaporated.

Table 1

| No. | $SO_3^{2-}$ concentration in the waste solution (gram ion/ℓ) | $NH_3$ gas (ppm) | $H_2S$ gas (ppm) | $SO_2$ gas (ppm) | Appearance (distillate) |
|---|---|---|---|---|---|
| 1 | $1.5 \times 10^{-4}$ | 500 | 100 | 0 | cloudy (slightly yellowish) |
| 2 | $5 \times 10^{-4}$ | 100 | 40 | 0 | a little turbid |
| 3 | $1 \times 10^{-3}$ | 50 | 30 | 0 | very little turbid |
| 4 | $5 \times 10^{-3}$ | 5 | 0 | 0 | colorless and transparent |
| 5 | $1 \times 10^{-2}$ | 2 | 0 | 0 | colorless and transparent |
| 6 | 0.1 | 0 | 0 | 0 | colorless and transparent |
| 7 | 0.5 | 0 | 0 | 0 | colorless and transparent |
| 8 | 2 | 0 | 0 | 20 | colorless and transparent |
| 9 | 4 | 0 | 0 | 50 | colorless and transparent |
| 10 | 5 | 0 | 0 | 500 | colorless and transparent |

As is apparent from Table 1, when the $SO_3^{2-}$ concentration in the waste solution is from $5 \times 10^{-4}$ to 4 gram ion/ℓ, the distillate will not become turbid, and also $NH_3$ gas, $H_2S$ gas and $SO_2$ gas are present, if at all, in small amounts. When the concentration is from $5 \times 10^{-3}$ gram ion/ℓ to 0.5 gram ion/ℓ, the distillate becomes colorless and transparent, and generation of $NH_3$ gas, $H_2S$ gas and $SO_2$ gas is little.

In contrast, if the $SO_3^{2-}$ concentration in the waste solution is less than $5 \times 10^{-4}$ gram ion/ℓ, $NH_3$ gas and $H_2S$ gas are generated with the distillate becoming turbid, and if it exceeds 4 gram ion/ℓ, $SO_2$ gas is generated.

Experimental example 2

After 100 g of the compound indicated in Table 2 was added to 5 ℓ of the waste solution after storage for the same time as in Experimental example 1, the pH was adjusted to 8.0 with $H_2SO_4$ and NaOH, and after concentration to 2.5 ℓ in the evaporation tank, $NH_3$ gas, $H_2S$ gas and $SO_2$ gas were quantitatively determined similarly as in Experimental example 1, simultaneously with examination of the appearance of the distillate. After concentration, the compounds in the respective concentrates were quantitatively determined to find that they all existed in amounts of 5 g/ℓ or more. The results are shown in Table 2.

Table 2

| No. | Compound capable of releasing sulfite ions | $NH_3$ gas (ppm) | $H_2S$ gas (ppm) | $SO_2$ gas (ppm) | Appearance (distillate) |
|---|---|---|---|---|---|
| 11 | I - (1) | 0 | 0 | 0 | colorless and transparent |
| 12 | I - (2) | 1 | 0 | 0 | colorless and transparent |
| 13 | I - (3) | 3 | 2 | 0 | colorless and transparent |
| 14 | I - (4) | 1 | 2 | 2 | colorless and transparent |
| 15 | I - (5) | 2 | 1 | 0 | colorless and transparent |
| 16 | II - (1) | 1 | 2 | 0 | colorless and transparent |
| 17 | II - (2) | 0 | 0 | 0 | colorless and transparent |
| 18 | II - (3) | 1 | 0 | 2 | colorless and transparent |
| 19 | II - (4) | 2 | 1 | 3 | colorless and transparent |
| 20 | A - (1) | 0 | 0 | 0 | colorless and transparent |
| 21 | A - (2) | 2 | 2 | 1 | colorless and transparent |
| 22 | A - (7) | 3 | 2 | 1 | colorless and transparent |

As is apparent from Table 2, even when a compound capable of releasing sulfite ions is used, substantially the same effect as using sodium sulfite, as in Experimental example 1, was obtained.

Experimental example 3

The pH of the waste solution No. 1 stored for the same time as in Experimental example 1 and the waste solution No. 23 with 20 g/ℓ of potassium bisulfite added was adjusted with $H_2SO_4$ and KOH as shown in Table 3. Evaporation was initiated, and the pH was adjusted as shown in Table 1 every time when 500 mℓ had evaporated. Evaporation and concentration were performed to 2.5 ℓ, and the evaporated gas was cooled to obtain a distillate, which was evaluated similarly as in Experimental example 1. The $SO_3^{2-}$ concentration in the evaporation tank after completion of the experiment was found to be 5 x $10^{-3}$ gram ion/ℓ or more.

Table 3

| No. | pH of waste solution | $NH_3$ gas (ppm) | $H_2S$ gas (ppm) | $SO_2$ gas (ppm) | Appearance (distillate) |
|---|---|---|---|---|---|
| 1 | 2.0 | 0 | 150 | 2 | cloudy (slightly yellowish) |
| | 3.0 | 0 | 100 | 0 | turbid |
| | 4.0 | 0 | 50 | 0 | a little turbid |
| | 5.0 | 5 | 10 | 0 | very little turbid |
| | 6.0 | 50 | 5 | 0 | colorless and transparent |
| | 7.0 | 100 | 0 | 0 | colorless and transparent |
| | 8.0 | 500 | 0 | 0 | colorless and transparent |
| | 9.5 | 500 | 0 | 0 | very thin yellow |
| | 11.0 | 500 | 0 | 0 | thin yellow |
| | 12.0 | 800 | 0 | 0 | yellow |
| 23 | 2.0 | 0 | 30 | 500 | turbid |
| | 3.0 | 0 | 20 | 100 | a little turbid |
| | 4.0 | 0 | 10 | 50 | very little turbid |
| | 5.0 | 0 | 0 | 2 | colorless and transparent |
| | 6.0 | 2 | 0 | 0 | colorless and transparent |
| | 7.0 | 20 | 0 | 0 | colorless and transparent |
| | 8.0 | 100 | 0 | 0 | colorless and transparent |
| | 9.5 | 200 | 0 | 0 | very thin yellow |
| | 11.0 | 300 | 0 | 0 | thin yellow |
| | 12.0 | 500 | 0 | 0 | yellow |

As is apparent from Table 3, by addition of sulfite ions ($SO_3^{2-}$), generation of $NH_3$ gas, $H_2S$ gas and $SO_2$ gas is little, and also generation of turbidity of the distillate is little, but good results are obtained when the pH is from 3.0 to 11.0.

Experimental example 4

The color developing waste solution No. 24 containing no thiosulfate was adjusted to pH 2.0, 6.0 and 12.0 with $H_2SO_4$ and NaOH, and similarly the waste solution No. 25 having a bleaching waste solution containing no thiosulfate added was added into the color developing waste solution, and which was similarly adjusted in pH.

A waste solution No. 26 having 50 g/ℓ of ammonium thiosulfate added into the waste solution No. 25 was similarly adjusted in pH, a waste solution No. 27 having 50 g/ℓ of ammonium thiosulfate and 5 g/ℓ of AgBr added into the waste solution No. 25 and a waste solution No. 28 having a 30 % volume of the fixing waste solution added into the waste solution of No. 25 were similarly adjusted in pH.

When these waste solutions were stored for 1 week and the sulfite ion concentrations in the waste solutions were measured, all were found to be less than $4.5 \times 10^{-4}$ gram ion/ℓ.

Next, 10 g/ℓ of sodium sulfite was added into the stored waste solutions Nos. 24 to 28 to prepare waste solutions Nos. 29 to 33, which were similarly adjusted to pH 2.0, 6.0 and 12.0.

Each 5 ℓ of all of the above waste solutions was added to the device shown in Fig. 1, and evaporation concentration was performed to 2.0 ℓ. The pH was corrected to the initial value every time when 500 mℓ had evaporated.

The sulfite ion concentrations in the waste solutions Nos. 29 to 33 after evaporation concentration were found to be $7.94 \times 10^{-3}$ gram ion/ℓ or more.

The results are shown in Table 4.

Table 4

| pH | Concentration of sulfite ions $4.5 \times 1^{-4}$ gram ion/ℓ or less | | | | | Initial concentration of sulfite ions $7.94 \times 10^{-2}$ gram ion/ℓ | | | | |
|---|---|---|---|---|---|---|---|---|---|---|
| | No. | $NH_3$ or amine gas (ppm) | H2S gas (ppm) | $SO_2$ gas (ppm) | Appearance (distillate) | No. | $NH_3$ or amine gas (ppm) | $H_2S$ gas (ppm) | $SO_2$ gas (ppm) | Appearance (distillate) |
| 2.0 | 24 | 0 | 0 | 0 | very little yellow | 29 | 0 | 0 | 100 | very little yellow |
| 6.0 | | 2 | 0 | 0 | colorless and transparent | | 0 | 0 | 0 | colorless and transparent |
| 12.0 | | 5 | 0 | 0 | yellow | | 0 | 0 | 0 | yellow |
| 2.0 | 25 | 1 | 0 | 0 | very little yellow | 30 | 0 | 0 | 100 | very little yellow |
| 6.0 | | 10 | 0 | 0 | colorless and transparent | | 5 | 0 | 0 | colorless and transparent |
| 12.0 | | 100 | 0 | 0 | yellow | | 50 | 0 | 0 | yellow |
| 2.0 | 26 | 2 | 200 | 0 | a little cloudy | 31 | 0 | 40 | 100 | a little cloudy |
| 6.0 | | 100 | 10 | 0 | colorless and transparent | | 5 | 1 | 0 | colorless and transparent |
| 12.0 | | 800 | 0 | 0 | yellow | | 600 | 0 | 0 | yellow |

Table 4 (cont'd)

| pH | Concentration of sulfite ions 4.5 x $10^{-4}$ gram ion/ℓ or less | | | | | Initial concentration of sulfite ions 7.94 x $10^{-2}$ gram ion/ℓ | | | | |
|---|---|---|---|---|---|---|---|---|---|---|
| | No. | $NH_3$ or amine gas (ppm) | $H_2S$ gas (ppm) | $SO_2$ gas (ppm) | Appearance (distillate) | No. | $NH_3$ or amine gas (ppm) | $H_2S$ gas (ppm) | $SO_2$ gas (ppm) | Appearance (distillate) |
| 2.0 | 27 | 2 | 200 | 0 | cloudy (a little yellowish) | 32 | 0 | 30 | 100 | cloudy (a littlw yellowish) |
| 6.0 | | 100 | 10 | 0 | colorless and transparent | | 2 | 0 | 0 | colorless and transparent |
| 12.0 | | 800 | 0 | 0 | yellow | | 500 | 0 | 0 | yellow |
| 2.0 | 28 | 2 | 200 | 0 | cloudy (a little yellowish) | 33 | 0 | 30 | 100 | cloudy (a little yellowish) |
| 6.0 | | 100 | 10 | 0 | colorless and transparent | | 2 | 0 | 0 | colorless and transparent |
| 12.0 | | 800 | 0 | 0 | yellow | | 500 | 0 | 0 | yellow |

As is apparent from Table 4, the waste solution containing sulfite ions has little bad odor in all cases, and particularly occurence of $H_2S$ gas, which is readily generated by containment of thiosulfate ions, can be well prevented by sulfite ions. However, in solutions No. 32 and 33 containing silver having a pH of 6.0, the occurence of $H_2S$ gas is completely prevented.

Experimental example 5

The above photographic processing waste solution in an amount of 5 ℓ was added to the device shown in Fig. 2, and evaporation treatment was performed.

As the catalyst, carried Pd was employed, and by varying the contact temperature as in Table 5, the concentrations of $NH_3$ and $NO_2$ in the gas on the surface of the distillate were measured. The results are shown in Table 5.

Table 5

| Temperature (°C) | 10 | 20 | 50 | 120 | 200 | 250 | 350 | 400 | 500 |
|---|---|---|---|---|---|---|---|---|---|
| $NH_3$ (ppm) | 600 | 1.0 | 0.5 | 0.1 | 0.1 | 0.1 | 0.5 | 0.5 | 0.5 |
| $NO_2$ (ppm) | 0 | 0 | 0 | 0 | 0 | 0 | 0.1 | 10 | 50 |

As is apparent from Table 5, the ammonia odor was gradually reduced as the temperature became 20 °C or higher, 50 °C or higher and 120 °C or higher. On the other hand, the amount of $NO_2$ was reduced as the temperature became 400 °C or lower, 350 °C or lower and 250 °C or lower. Particularly, there was substantially no odor when contact was effected from 120 to 250 °C.

Experimental example 6

When the same experiment as in Experimental example 5 was conducted by changing the catalyst to carried Pt, carried Rh, carried Ir, carried Fe, carried Co, carried Ni, carried Ru, carried Os, carried Cu, carried Zn and carried Mn, the same results as in Experimental example 5 were obtained for the catalysts of carried Pt, carried Rh and carried Ir, but ammonia removal performance was slightly inferior for carried Fe, carried Co, carried Ni, carried Ru, carried Os, carried Cu, carried Zn and carried Mn.

Experimental example 7

The waste solution used in Experimental example 5 was adjusted to the pH shown in Table 6 before initiation of heating. As the pH controlling agent, $H_2SO_4$ and KOH were employed.

Evaporation and concentration were initiated, and the evaporated gas was cooled and then passed through a carried Pd catalyst. The catalyst temperature was 200 °C.

The $NH_3$ concentration before passage through the catalyst and the $NH_3$ concentration and amine odor after passage were measured. The measurement results are shown in Table 6. Amine odor was measured according to the organoleptic test by 10 monitor members. In Table 6, "-" indicates that the number of members who felt there was odor was 0, "±" 1 to 2, "+" 3 to 5, "++" 6 or more, respectively.

Table 6

| pH of waste solution | 2 | 3 | 4 | 5 | 7 | 9 | 10 | 13 | 14 |
|---|---|---|---|---|---|---|---|---|---|
| $NH_3$ before passing (ppm) | 60 | 100 | 150 | 200 | 500 | 1000 | 2000 | 4000 | 6000 |
| $NH_3$ after passing (ppm) | 40 | 30 | 20 | 0.1 | 0.1 | 0.1 | 0.1 | 0.1 | 0.1 |
| Amine odor | - | - | - | - | - | - | - | ± | + |

As is apparent from Table 6, the odor of $NH_3$ and amine is eliminated at a waste solution pH of from 3 to 10.

Experimental example 8

When the same experiment as in Experimental example 7 was conducted by changing the catalyst to carried Pt, carried Rh, carried Ir, carried Fe, carried Co, carried Ni, carried Ru, carried Os, carried Cu, carried Zn and carried Mn, the same results as in Experimental example 7 were obtained for carried Pt, carried Rh and carried Ir, but ammonia removal performance was slightly inferior for carried Fe, carried Co,

carried Ni, carried Ru, carried Os, carried Cu, carried Sn and carried Mn.

Experimental example 9

Comparison was made between the case in which the evaporated gas obtained by the evaporation treatment of the waste solution used in Experimental example 5 was contacted with the carried Pd catalyst after cooling and the case in which it was contacted with the carried Pd catalyst before cooling. The catalyst temperature was made 200 °C.

When the $NH_3$ concentration in the dry gas on the surface of the distillate was measured, the results shown in Table 7 were obtained. The concentration before the passage of the catalyst was 2,000 ppm.

Table 7

| | Passage of catalyst before gas cooler | Passage of catalyst after gas cooler |
|---|---|---|
| $NH_3$ odor in the gas on the surface of the distillate (ppm) | 10 | 0.1 |

As is apparent from Table 7, under the state containing water vapor before cooling, $NH_3$ slightly remains, probably because the catalyst activity is slightly inferior. Accordingly, it is preferred to deodorize the gas after removal of water vapor by condensation.

Experimental example 10

The above photographic processing solution in an amount of 5 ℓ was added to the device shown in Fig. 3, and evaporation treatment was performed.

To the photographic processing waste solution, 10 g/ℓ of water-soluble polymer indicated in Table 8 was added. In the table, PVA means polyvinyl alcohol and PUP polyvinyl pyrrolidone.

The waste solution in the evaporation tank was adjusted to pH 6 with $H_2SO_4$ and KOH before initiation of heating.

Evaporation and concentration were effected to 500 mℓ and the evaporated gas was cooled to obtain a distillate.

The concentrations of $H_2S$ gas and $NH_3$ gas in the gas on the surface of distillate were measured. The results are shown in Table 8.

Table 8

| Concentration of the gas on the surface of the distillate | No additive | Polyethylene n=600 | PVA n=1400 | Isobutylene-maleic anhydride copolymer n=500 | PVP n=100 | Gelatine n=330 | Hydroxyethyl cellulose n=500 | Polyethylene imine n=1000 |
|---|---|---|---|---|---|---|---|---|
| $H_2S$ (ppm) | 6 | 7 | 0.1 | 0.1 | 0.2 | 0.1 | 0.1 | 0.1 |
| $NH_3$ (ppm) | 600 | 700 | 50 | 10 | 100 | 20 | 40 | 30 |

(n=average polymerization degree)

As is apparent from Table 8, bad odor is inhibited when a water-soluble polymer is used. In contrast, when no such polymer was added or when polymers outside those usable according to the present invention are added, the effect is not as marked.

<u>Experimental example 11</u>

The experiment in Experimental example 10 was repeated using PVA with different polymerization degrees. The results are shown in Table 9.

Table 9

| Average polymerization degree / Concentration of the gas on the surface of the distillate | 5 | 30 | 100 | 200 | 1000 | 3000 | 5000 | 10000 | 15000 |
|---|---|---|---|---|---|---|---|---|---|
| $H_2S$ (ppm) | 6 | 3 | 2 | 0.5 | 0.1 | 0.1 | 2 | 3 | 5 |
| $NH_3$ (ppm) | 600 | 300 | 100 | 50 | 50 | 50 | 100 | 200 | 600 |

As is apparent from Table 9, PVA having a polymerization degree of from 30 to 10,000 is particularly excellent in inhibiting bad odor.

Experimental example 12

When gelatin, hydroxyethyl celullose, isobutylenemaleic anhydride copolymer and polyvinyl pyrrolidone were used in place of PVA used in Experimental example 11, the same results as in Experimental example 11 were obtained.

Experimental example 13

In carrying out the same experiment as in Experimental example 10, the pH of the waste solution before initiation of evaporation was varied. At pH 3 to 11, a reduction of the $H_2S$ concentration at the upper portion of the distillate was obtained. At pH 5 or less, the amount of $H_2S$ was slightly elevated, and further increased at pH 4 or less.

On the other hand, for the ammonia odor, the effect was obtained within the range of pH 3 to 11, but the amount ammonia at the upper portion of the distillate was slightly elevated at pH 7 or less, and further slightly elevated at pH 8 or more.

Experimental example 14

When thiosulfate ions were removed from the waste solution used in Experimental example 10, the amount of $H_2S$ generated was found to be lowered. Also, it was found that it is more effective to use a water-soluble polymer when thiosulfate is present. Further, for silver ions, the same effect as in the case of thiosulfate ions was obtained.

Experimental example 15

The above photographic processing waste solution in an amount of 5 ℓ (waste solution No. 34) was added to the device shown in Fig. 4, and evaporation treatment was performed.

Evaporation and concentration were effected to 2.5 ℓ, and the evaporated gas was cooled to obtain a distillate.

When the temperature or the distillate was 25 °C, $NH_3$ gas, $H_2S$ gas and $SO_2$ gas in the gas on the surface of the distillate were quantitatively determined and also the appearance of the distillate was examined. The results are shown in Table 10.

Next, each 5 ℓ of the waste solutions No. 35 to 43 had added to them 10 g/ℓ of the various oxidizing agents shown in Table 10, and the same experiment was repeated. The results are also shown in Table 10.

Table 10

| Waste solution No. | Oxidizing agent | $NH_3$ gas (ppm) | $H_2S$ gas (ppm) | Appearance (distillate) | Remarks |
|---|---|---|---|---|---|
| 34 | None | 100 | 30 | a little turbid | |
| 35 | Potassium persulfate | 5 | 0 | colorless and transparent | |
| 36 | Potassium peroxomonosulfate | 5 | 0 | colorless and transparent | |
| 37 | Hydrogen peroxide | 5 | 0 | colorless and transparent | |
| 38 | Sodium persulfate | 5 | 0 | colorless and transparent | |
| 39 | Sodium perborate | 10 | 2 | colorless and transparent | |
| 40 | Potassium bromate | 15 | 5 | colorless and transparent | |
| 41 | Sodium perchlorate | 10 | 2 | colorless and transparent | |
| 42 | Manganese dioxide | 15 | 5 | colorless and transparent | |
| 43 | $Fe_3O_4$ | 10 | 2 | colorless and transparent | |

As is apparent from Table 10, in the waste solution No. 34 in which no oxidizing agent is added, not only are $NH_3$ gas and $H_2S$ gas concentrations high, but also the distillate is remarkably turbid. In contast,

when an oxidizing agent is added, the distillate becomes colorless and transparent, with little generation of $NH_3$ gas and $H_2S$ gas.

Sample Nos. 35 to 39 containing peroxide oxidizing agents exhibit particularly good results.

Experimental example 16

The waste solution No. 34 stored for the same time as in Experimental example 15, and further the waste liqour No. 44 with 20 g/ℓ of potassium persulfate added were adjusted in pH with $H_2SO_4$ and KOH as shown in Table 11. Evaporation was initiated, and the pH was adjusted as shown in Table 11 every time when 500 mℓ had evaporated. Evaporation and concentration were effected to 2.0 ℓ, and the evaporated gas was cooled to obtain a distillate, which was evaluated similarly as in Experimental example 15.

Table 11

| No. | pH of waste solution | $NH_3$ gas (ppm) | $H_2S$ gas (ppm) | Appearance (distillate) |
|---|---|---|---|---|
| 34 | 2.0 | 0 | 200 | cloudy (a little yellowish) |
| | 3.0 | 0 | 150 | turbid |
| | 4.0 | 0 | 50 | a little turbid |
| | 5.0 | 10 | 30 | very little turbid |
| | 6.0 | 100 | 25 | colorless and transparent |
| | 7.0 | 200 | 0 | colorless and transparent |
| | 8.0 | 500 | 0 | colorless and transparent |
| | 9.5 | 500 | 0 | very thin yellow |
| | 11.0 | 500 | 0 | thin yellow |
| | 12.0 | 800 | 0 | yellow |
| 44 | 2.0 | 0 | 5 | turbid |
| | 3.0 | 0 | 0 | a little turbid |
| | 4.0 | 0 | 0 | very little turbid |
| | 5.0 | 0 | 0 | colorless and transparent |
| | 6.0 | 0 | 0 | colorless and transparent |
| | 7.0 | 0 | 0 | colorless and transparent |
| | 8.0 | 5 | 0 | colorless and transparent |
| | 9.5 | 20 | 0 | very thin yellow |
| | 11.0 | 50 | 0 | thin yellow |
| | 12.0 | 100 | 0 | yellow |

As is apparent from Table 11, by addition of potassium persulfate, generation of $NH_3$ gas and particularly toxic $H_2S$ gas is small, and generation of turbidity in the distillate is also small. Particularly good results are obtained in the range of pH 3.0 to 11.0.

Experimental example 17

There were prepared waste solutions controlled to pH 2.0, 6.0 and 12.0 with $H_2SO_4$ and NaOH of the waste solution No. 45 for comparative purpose with 30 vol. % of color developing waste solution added into the bleaching waste solution; waste solutions similarly adjusted in pH of the waste solution No. 46 with 50 g/ℓ of ammonium thiosulfate added into the waste solution No. 45; waste solutions adjusted similarly in pH of the waste solution No. 47 with 50 g/ℓ of ammonium thiosulfate and 5 g/ℓ of AgBr added into the waste

solution No. 45; and the waste solutions adjusted similarly in pH of the waste solution No. 48 with 30 vol. % of fixing waste solution added into the waste solution No. 45.

Next, waste solutions No. 49 to 52 having 10 g/ℓ of potassium peroxomonosulfate added into these waste solutions No. 45 to 48 were prepared, and similarly adjusted in pH.

All of the above waste solutions were added in amounts of 5 ℓ to the device shown in Fig. 4, and evaporation concentration was performed. The results are shown in Table 12. pH control was effected every time when 500 mℓ was evaporated, and concentration was effected to 1.5 ℓ.

Table 12

| pH | No oxidizing agent | | | | Initial potassium peroxomonosulfite 10g/ℓ | | | |
|---|---|---|---|---|---|---|---|---|
| | No. | $NH_3$ or amine gas (ppm) | $H_2S$ gas (ppm) | Appearance (distillate) | No. | $NH_3$ or amine gas (ppm) | $H_2S$ gas (ppm) | Appearance (distillate) |
| 2.0 | 45 | 1 | 0 | very little yellow | 49 | 0 | 0 | very little yellow |
| 6.0 | | 20 | 0 | colorless and transparent | | 20 | 0 | colorless and transparent |
| 12.0 | | 200 | 0 | yellow | | 200 | 0 | yellow |
| 2.0 | 46 | 2 | 300 | a little cloudy | 50 | 0 | 20 | very little turbid |
| 6.0 | | 150 | 10 | colorless and transparent | | 10 | 1 | colorless and transparent |
| 12.0 | | 800 | 0 | yellow | | 200 | 0 | yellow |
| 2.0 | 47 | 2 | 300 | cloudy (a little yellowish) | 51 | 0 | 20 | colorless and transparent |
| 6.0 | | 150 | 30 | colorless and transparent | | 5 | 0 | colorless and transparent |
| 12.0 | | 800 | 0 | yellow | | 200 | 0 | yellow |
| 2.0 | 48 | 2 | 300 | cloudy (a little yellowish) | 52 | 0 | 20 | colorless and transparent |
| 6.0 | | 150 | 30 | colorless and transparent | | 5 | 0 | colorless and transparent |
| 12 | | 800 | 0 | yellow | | 200 | 0 | yellow |

As is apparent from Table 12, the waste solutions containing potassium peroxomonosulfate have little bad odor in all cases, particularly preventing effectively $H_2S$ gas which is liable to be generated by containment of thiosulfate ions. Particularly, $H_2S$ gas is completely prevented in the waste solutions controlled to pH 6.0 among the waste solutions No. 51 and 52 containing silver.

Experimental example 18

5 ℓ of photographic processing waste solution was added to the device shown in Fig. 5 and evaporation treatment was carried out.

The pH of the photographic processing waste solution was adjusted as shown in Table 13 before initiation of heating. As a pH controlling agent, $H_2SO_4$ and KOH were employed. Evaporation and concentration were initiated; the pH was adjusted as shown in Table 13 every time when 100 mℓ had evaporated. Evaporation and concentration were performed to 2.5 ℓ, and the evaporated gas was cooled to obtain a distillate.

When the temperature of the distillate was 25 °C, $NH_3$ gas and $H_2S$ gas on the surface of the distillate were quantitatively determined, and also the appearance of the distillate was examined. The results are shown in Table 13.

Table 13

| pH of waste solution | $NH_3$ gas (ppm) | $H_2S$ gass (ppm) | Appearance (distillate) |
|---|---|---|---|
| 2.0 | 0 | 60 | cloudy (a little yellowish) |
| 3.0 | 0 | 40 | a little turbid |
| 4.0 | 0 | 30 | very little turbid |
| 5.0 | 0 | 5 | colorless and transparent |
| 6.0 | 20 | 0 | colorless and transparent |
| 7.0 | 60 | 0 | colorless and transparent |
| 8.0 | 500 | 0 | colorless and transparent |
| 9.5 | 500 | 0 | very thin yellow |
| 11.0 | 500 | 0 | thin yellow |
| 12.0 | 500 | 0 | yellow |

As is apparent from Table 13, when the pH of the waste solution is from 3.0 to 11.0, the distillate will not preferably be turbid and will not completely become yellow. Further, at a pH of from 4.0 to 8.0, the distillate is colorless and transparent and, at pH 4.0, a little turbid. Particularly, at a pH of from 5.0 to 7.0, the distillate becomes colorless and transparent has a small concentration of $NH_3$ gas and $H_2S$ gas.

On the contrary, when the pH is outside the range of 3.0 to 11.0, the concentrations of $NH_3$ gas and $H_2S$ gas are high with the distillate becoming turbid and yellowish.

Experimental example 19

After 100 g of the buffering acent indicated in Table 14 was added to 5 ℓ of the waste solution employed in Experimental example 18, the pH was adjusted to 6.5 with $H_2SO_4$ and NaOH. After concentration to 2.5 ℓ in the evaporation tank, the pH was measured. The concentrated waste solution was further concentrated until the distillate becomes turbid and bad odor was generated (at the point that two of five monitors noticed bad odor).

Table 14

| Sample No. | Kind of buffering agent | pH | Concentration degree the generation of turbid and bad odor initiated |
|---|---|---|---|
| 53 | Sodium bicarbonate | 5.5 | 1/7 concentration |
| 54 | Sodium monophosphate | 5.3 | 1/5 concentration |
| 55 | Boric acid | 5.3 | 1/5 concentration |
| 56 | Calcium carbonate | 5.8 | 1/10 concentration |
| 57 | Calcium chloride | 5.5 | 1/7 concentration |
| 58 | Magnesium chloride | 5.5 | 1/7 concentration |
| 59 | Aluminum sulfate | 5.8 | 1/10 concentration |
| 60 | Barium chloride | 5.7 | 1/7 concentration |
| 61 | Potassium chloride | 5.1 | 1/3 concentration |
| 62 | Ethylenediaminetetraacetate | 5.3 | 1/5 concentration |
| 63 | Nitrilotriacetate | 5.3 | 1/5 concentration |
| 64 | 1-hydroxyethylidene-1,1-diphosphonate | 5.3 | 1/5 concentration |

As is apparent from Table 14, as the pH becomes nearer to 6.5, the variation of pH becomes smaller. Sample Nos. 56 and 59, which had a pH after concentration nearer to 6.5 as compared with the others, did not generate bad odor until the concentration degree became 1/10.

Experimental example 20

There were prepared waste solution Sample No. 65 not containing thiosulfate in the color developing waste solution; waste solution Sample No. 66 with 30 volume % of bleaching waste solution added similarly not containing thiosulfate in the color developing waste solution; waste solution Sample No. 67 with 50 g/ℓ of ammonium thiosulfate added into the waste soluiton of Sample No. 66; waste solution Sample No. 68 with 50 g/ℓ of ammonium thiosulfate and 5 g/ℓ of AgBr added into the waste solution Sample No. 66; and waste solution Sample No 69 with 30 volume % of the fixing solution added into the waste solution Sample No. 66.

The pH of each 5 ℓ of the above waste solutions was adjusted to 2.0, 6.0 and 12.0 with $H_2SO_4$ and NaOH. These solutions were evaporated and concentrated.

Table 15

| Sample No. | pH | $NH_3$ gas (ppm) | $H_2S$ gas (ppm) | Appearance (distillate) |
|---|---|---|---|---|
| 65 | 2.0 | 0 | 0 | very slightly yellowish |
| | 6.0 | 0 | 0 | colorless and transparent |
| | 12.0 | 0 | 0 | yellow |
| 66 | 2.0 | 0 | 0 | very slightly yellowish |
| | 6.0 | 20 | 0 | colorless and transparent |
| | 12.0 | 500 | 0 | yellow |
| 67 | 2.0 | 0 | 30 | a little cloudy |
| | 6.0 | 20 | 3 | colorless and transparent |
| | 12.0 | 500 | 0 | yellow |
| 68 | 2.0 | 0 | 60 | cloudy (a little yellowish) |
| | 6.0 | 20 | 0 | colorless and transparent |
| | 12.0 | 500 | 0 | yellow |
| 69 | 2.0 | 0 | 60 | cloudy (a little yellowish) |
| | 6.0 | 20 | 0 | colorless and transparent |
| | 12.0 | 500 | 0 | yellow |

As is apparent from Table 15, Sample Nos. 67 to 69 containing thiosulfate in the waste solution can exhibit great effect against the generation of bad odor gas and turbidity of the distillate. In particular, it is observed that Sample Nos. 68 and 69 containing silver can exhibit remarkable effects.

Experimental example 21

The waste solution employed in Experimental example 18 had 5 g/ℓ of a surface active agent of formulae (V) to (VIII) as shown in Table 16 added, and was concentrated in the device shown in Fig. 5. The concentration of $SO_3^{2-}$ and $NH_4^-$ were measured. The results are shown in Table 16.

Table 16

| Added compound No. | pH of waste solution | | | | | |
|---|---|---|---|---|---|---|
| | pH 5.0 | | pH 7.0 | | pH 9.0 | |
| | $SO_3^{2-}$ (g/ℓ) | $NH_4^-$ (g/ℓ) | $SO_3^{2-}$ (g/ℓ) | $NH_4^-$ (g/ℓ) | $SO_3^{2-}$ (g/ℓ) | $NH_4^-$ (g/ℓ) |
| None | 5.4 | 0.4 | 0.3 | 4.2 | 0 | 20 |
| 1 | 4.1 | 0.3 | 0.2 | 3.1 | 0 | 12 |
| 6 | 3.9 | 0.3 | 0.2 | 3.0 | 0 | 12 |
| 10 | 4.0 | 0.3 | 0.2 | 3.2 | 0 | 13 |
| 12 | 4.3 | 0.3 | 0.2 | 3.3 | 0 | 14 |
| 13 | 3.9 | 0.3 | 0.2 | 3.1 | 0 | 12 |
| 16 | 3.9 | 0.3 | 0.2 | 3.0 | 0 | 12 |
| 17 | 3.7 | 0.3 | 0.2 | 3.0 | 0 | 11 |
| 18 | 4.1 | 0.3 | 0.2 | 3.3 | 0 | 13 |
| 20 | 4.2 | 0.3 | 0.2 | 3.4 | 0 | 14 |
| 23 | 4.1 | 0.3 | 0.2 | 3.3 | 0 | 13 |
| 25 | 4.0 | 0.3 | 0.2 | 3.3 | 0 | 13 |
| 26 | 4.0 | 0.3 | 0.2 | 3.1 | 0 | 12 |
| 29 | 3.8 | 0.3 | 0.2 | 3.1 | 0 | 12 |
| 32 | 4.0 | 0.3 | 0.2 | 3.2 | 0 | 13 |
| 35 | 3.9 | 0.3 | 0.2 | 3.1 | 0 | 12 |
| 38 | 3.7 | 0.3 | 0.2 | 3.0 | 0 | 11 |
| 40 | 3.9 | 0.3 | 0.2 | 3.2 | 0 | 12 |
| 42 | 4.3 | 0.3 | 0.2 | 3.4 | 0 | 13 |

As is apparent from Table 16, influent of ammonium sulfite into the distillate is lowered by adding the surface active agent.

Sample containing a surface active agent had less generation of bad odor. Only one of five monitors noticed bad odor.

Experimental example 22

A part of a high-sensitive film for direct X-rays coated with silver iodobromide gelatin emulsion (containing 2 mol % of silver iodide) on both surface thereof was exposed and then processed continuously with the processing solutions mentioned below and by the processing steps also mentioned below.

| [Developing replenishing solution] | |
|---|---|
| Hydroquinone | 10 g |
| 1-Phenyl-3-pyrazolidone | 0.35 g |
| Sodium carbonate (monohydrate) | 25 g |
| Sodium hydroxide | 5 g |
| 5-methylbenzotriazole | 0.15 g |
| Glacial acetic acid | 15 g |
| Boric acid | 10 g |
| Potassium sulfite | 70 g |
| Glutaraldehyde (25 % aqueous solution) | 20 g |
| Diethylenetriamine pentaacetic acid | 1.0 g |
| Made up to 1 ℓ with water, adjusted to pH 10.40 with sulfuric acid and potassium hydroxide. | |

[Developing tank solution]

To 1 ℓ of the developing replenishing solution, the following were added.

| | |
|---|---|
| Glacial acetic acid | 6.0 g |
| Potassium bromide | 4.0 g |

| [Fixing replenishing solution and tank solution] | |
|---|---|
| Ammonium thiosulfate | 200 g |
| Sodium sulfite | 20 g |
| Acetic acid | 30 g |
| Pentasodium diethylenetriaminepentaacetate | 1.0 g |
| Made up to 1 ℓ with water, adjusted to pH 4.2 with acetic acid and ammonium. | |

| [Water washing-substitutive stabilizing replenishing solution and tank solution] | |
|---|---|
| Diethylenetriaminepentaacetic acid | 1.0 g |
| 4-(-nitrobutyl)morpholine | 0.1 g |
| Made up to 1 ℓ with water, adjusted to pH 6.5 with sulfuric acid and aqueous ammonium. | |

| [Developing processing step] | | |
|---|---|---|
| | Processing temperature | Processing time |
| Developing | 35 °C | 25 s |
| Fixing | 35 °C | 25 s |
| Water washing-substitutive stabilization | 30 °C | 20 s |
| Drying | 50 °C | |

An automatic processing machine was filled with the above developing tank solution, the fixing tank solution and the washing-substitutive stabilizing tank solution, and a running test was performed while replenishing the developing replenishing solution in an amount of 450 mℓ, the fixing replenishing solution in an amount of 900 mℓ and the water washing-substitutive stabilizing replenishing solution in an amount of 600 mℓ per 1 $m^2$ of the light-sensitive material used for the sample.

Each 5 ℓ of X-ray waste solutions discharged in the above processing was subjected to evaporation

treatment as shown in Fig. 5. The results are shown in Table 17.

Table 17

| | pH (waste solution) | Distillate (concentrated to 1/5) | | | |
|---|---|---|---|---|---|
| | | Floatings | Color | $NH_4^+$ concentration(g/ℓ) | $SO_3^{2-}$ concentration(g/ℓ) |
| None additive | 2.5 | large amount | white | 0 | 8.1 |
| | 4.5 | very slightly | colorless and transpatrent | 2 | 5.0 |
| | 6.5 | none | colorless and transparent | 10 | 2.5 |
| | 8.5 | none | colorless and transparent | 15 | 0 |
| | 10.5 | none | very thin yellowish | 25 | 0 |
| | 12.5 | none | yellow | 40 | 0 |
| aluminum polychloride (20 g/ℓ) | 6.5 | none | colorless and transparent | 4 | 1.2 |
| Potassium carbonate (20 g/ℓ) | 6.5 | none | colorless and transparent | 10 | 1.1 |
| Grains of limestone (20 g/ℓ) | 6.5 | none | colorless and transparent | 10 | 1.0 |
| Calcium chloride (20 g/ℓ) | 6.5 | none | colorless and transparent | 6 | 1.7 |
| Magnesium chloride (20 g/ℓ) | 6.5 | none | colorless and transparent | 6 | 1.6 |

As is apparent from Table 17, a distillate which is colorless and transparent and which has good balance of concentration of sulfuric acid and ammonium ions can be obtained with excellent inhibiting effect of bad odor.

According to the present invention, amine odor and ammonia odor of the distillate can be inhibited even when the photographic processing waste solution is subjected to evaporation treatment, and also generation of $H_2S$ gas and S gas can be inhibited. For this reason, even when, for example, an activated charcoal treatment is provided as a secondary treatment, loading at the secondary treatment can be alleviated to a great extent, whereby the amount of the adsorbent consumed can be decreased and problems in exchange of the adsorbent can be reduced.

Also, according to the present invention, turbidity of the distillate can be canceled, whereby not only there is no problem in disposal, but also reutilization become possible to provide a process which is extremely useful.

## Claims

1. A method for concentrating a photographic processing waste solution containing at least thiosulfate ions by evaporation, which comprises heating the solution and adding a pH controlling agent into the solution in order to maintain the pH of the solution of from 3.0 to 11.0.

2. A method according to claim 1, wherein said solution contains silver.

3. A method according to claim 1 or 2, wherein the pH of the solution is maintained at from 4.0 to 8.0.

4. A method according to any one of claims 1 to 3, which further comprises incorporating a compound selected from those of the formulae (V) to (VIII) in the waste solution before heating or during heating:

Formula (V)

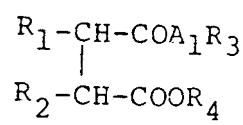

wherein one of $R_1$ and $R_2$ is a hydrogen atom and the other is a group of formula: $-SO_3M$, wherein M is a hydrogen atom or a monovalent cation; $A_1$ is an oxygen atom or a group of formula: $-NR_5-$ wherein $R_5$ is a hydrogen atom or an alkyl group having from 1 to 8 carbon atoms optionally substituted by a fluorine atom; and $R_3$ and $R_4$ each are independently alkyl groups having from 4 to 16 carbon atoms optionally substituted by a fluorine atom;
Formula (VI)

$A_2\text{-O-}(B)_m\text{-}X_1$

wherein $A_2$ is a monovalent organic group; B is an ethylene oxide or propylene oxide residue; m is an integer of from 4 to 50; and $X_1$ is a hydrogen atom, $SO_3Y$ or $PO_3Y_2$ wherein Y is a hydrogen atom, an alkali metal atom or an ammonium ion;

Formula (VII)

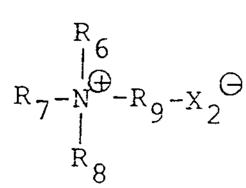

wherein $R_6$, $R_7$, $R_8$ and $R_9$ each are independently a hydrogen atom, an alkyl group or a phenyl group, with the proviso that the total number of carbon atoms in $R_6$, $R_7$, $R_8$ and $R_9$ is from 3 to 50; and $X_2^-$ is an anion;

Formula (VIII)

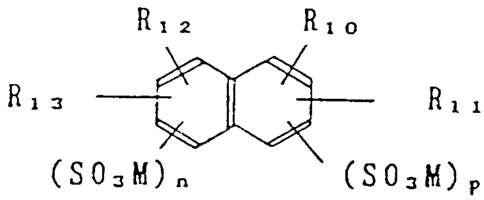

wherein $R_{10}$, $R_{11}$, $R_{12}$ and $R_{13}$ each are independently a hydrogen atom or an alkyl group; M is a hydrogen atom or a monovalent cation and n and p each are independently 0 or an integer of from 1 to 4, such that $1 \leqq n + p \leqq 8$.

**5.** A method according to any one of claims 1 to 4, wherein sulfite ions or a compound capable of releasing sulfite ions is added to the solution during or before heating of the solution.

**6.** A method according to claim 5, wherein the solution contains the sulfite ions in an amount of at least 5 x $10^{-4}$ gram ion/l.

**7.** A method according to claim 5 or 6, wherein the compound capable of releasing sulfite ions is at least one selected from
$K_2SO_3$, $Na_2SO_3$, $(NH_4)_2SO_3$, $NaHSO_3$, $KHSO_3$, $Na_2S_2O_5$ $K_2S_2O_5$;
bisulfite addition compounds of formula (I) or (II):

Formula (I)

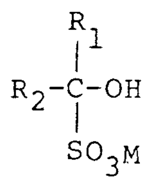

wherein $R_1$ is a hydrogen atom or an alkyl group having from 1 to 8 carbon atoms, $R_2$ is an alkyl group having from 1 to 8 carbon atoms and M is an alkyl metal or an ammonium group;

Formula (II)

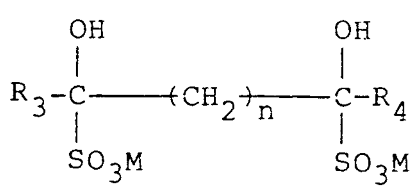

wherein $R_3$ and $R_4$ each independently are a hydrogen atom or an alkyl group having from 1 to 8 carbon atoms, M is an alkali metal or an ammonium group and n is an integer of from 0 to 6; and compounds of formula (A):

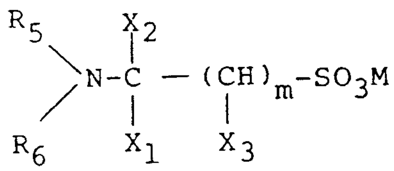

wherein $R_5$ and $R_6$ each independently is a hydrogen atom, an optionally substituted alkyl group, an optionally substituted acyl group or an optionally substituted carbamoyl group, or $R_5$ and $R_6$ are linked together to form, together with the nitrogen atom to which they are attached, a ring.

**8.** A method according to any one of claims 1 to 4, wherein gas evaporated from the solution is contacted with a catalyst which is a metal (a) to (d) or a compound thereof:
(a) at least one group VIII element selected from iron, cobalt, nickel, ruthenium, rhodium, palladium, osmium, iridium and platinum;
(b) copper;
(c) zinc; and
(d) manganese.

**9.** A method according to claim 8, wherein the metal is at least one selected from platinum, palladium, rhodium and iridium.

**10.** The method according to claim 8 or 9, wherein the compound of the metal is at least one selected from oxides and chlorides of the metal, chloroauric acid, hexachloroplatinum, rhodium chloride and nickel formate.

**11.** A method according to any one of claims 8 to 10, wherein the catalyst is carried by a carrier selected from $Al_2O_3$, $SiO_2$ and $ZrO_2$.

**12.** A method according to any one of claims 8 to 11, wherein the contact temperature with the catalyst is from 20 to 400 ° C.

**13.** A method according to any one of claims 1 to 4, wherein a water-soluble polymer is present in the solution.

**14.** A method according to claim 15, wherein the water-soluble polymer has a polymerization degree of from 30 to 10,000 and is present in an amount of from 0.01 to 300g per liter of the solution.

**15.** A method according to claim 13 or 14, wherein the water-soluble polymer is a compound having OH groups or CO groups.

**16.** A method according to claim 15, wherein the water-soluble polymer is a polyvinyl pyrrolidone type compound, a polyvinyl alcohol, gelatin, a cellulose compound or an isobutylene-maleic anhydride copolymer.

**17.** A method according to any one of claims 1 to 4, wherein an oxidizing agent capable of oxidizing thiosulfate ions is present in the solution.

**18.** A method according to claim 17, wherein the oxidizing agent is at least one selected from peroxides, halogenic acids and metal oxides.

**19.** A method according to claim 18, wherein the peroxide is sodium persulfate, potassium persulfate, ammonium persulfate, hydrogen peroxide, sodium peroxomonosulfate, potassium peroxomonosulfate, ammonium peroxomonosulfate, potassium percarbonate, sodium percarbonate, ammonium perborate, potassium perborate, sodium perborate, magnesium perborate, benzoyl peroxide, peracetic acid, calcium peroxide, sodium peroxide, barium peroxide, manganese peroxide or lithium peroxide.

**20.** A method according to claim 18 to 19, where the halogenic acid is perchloric acid, potassium perchlorate, sodium perchlorate, barium perchlorate, magnesium perchlorate, potassium chlorate, sodium chlorate, potassium bromate, potassium iodate, potassium hydrogen iodate or sodium iodate.

**21.** A method according to any one of claims 18 to 20, wherein the metal oxide is at least one of $Fe_2O_3$, $Fe_3O_4$, FeO, ZnO, NiO, CuO, $MnO_2$, $KMnO_4$, $Cu_2O$, $Pb_3O_4$, SnO, $Bi_2O_3$, CoO, $Cr_2O_3$, $K_2Cr_2O_7$, $KCrO_4$, $Ce_2O_3$, $TiO_2$ and $ZrO_2$.

**Revendications**

**1.** Procédé de concentration d'une solution résiduaire de processus photographique contenant au moins des ions thiosulfate par évaporation, dans lequel on chauffe la solution et on ajoute un agent régulateur de pH dans la solution afin de maintenir le pH de la solution entre 3,0 et 11,0.

**2.** Procédé selon la revendication 1 dans lequel ladite solution contient de l'argent.

**3.** Procédé selon la revendication 1 ou 2 , dans lequel le pH de la solution est maintenu entre 4,0 et 8,0.

**4.** Procédé selon l'une quelconque des revendications 1 à 3, dans lequel on incorpore en outre un composé choisi parmi ceux de formules (V) à (VIII) dans la solution résiduaire avant ou pendant le chauffage:

Formule (V)

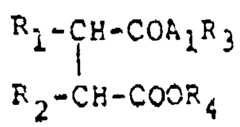

dans laquelle l'un des radicaux $R_1$ et $R_2$ est un atome d'hydrogène et l'autre est un groupe de formule: $-SO_3M$ , où M est un atome d'hydrogène ou un cation monovalent; $A_1$ est un atome d'oxygène ou un groupe de formule: $-NR_5-$ où $R_5$ est un atome d'hydrogène ou un groupe alcoyle ayant de 1 à 8 atomes de carbone facultativement substitués par un atome de fluor; et $R_3$ et $R_4$ représentent chacun indépendamment des groupes alcoyles ayant de 4 à 16 atomes de carbone éventuellement substitués par un atome de fluor;
Formule (VI)

$A_2$-O-$(B)_m$-$X_1$

dans laquelle $A_2$ est un groupe organique monovalent; B est un résidu d'oxyde d'éthylène ou d'oxyde de propylène; m est un nombre entier de 4 à 50; et $X_1$ est un atome d'hydrogène, $SO_3Y$ ou $PO_3Y_2$ où Y est un atome d'hydrogène, un atome de métal alcalin ou un ion ammonium;

Formule (VII)

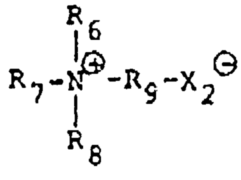

dans laquelle $R_6$ , $R_7$, $R_8$ et $R_9$ représentent chacun indépendamment un atome d'hydrogène, un groupe alcoyle ou un groupe phényle, sous réserve que le nombre total d'atomes de carbone dans $R_6$, $R_7$, $R_8$ et $R_9$ soit de 3 à 50; et $X_2^-$ est un anion;

Formule (VIII):

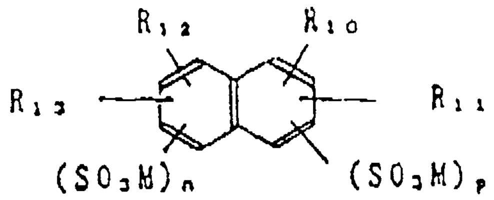

dans laquelle $R_{10}$, $R_{11}$, $R_{12}$ et $R_{13}$ représentent chacun indépendamment un atome d'hydrogène ou un groupe alcoyle; M est un atome d'hydrogène ou un cation monovalent et n et p sont chacun indépendamment 0 ou un nombre entier allant de 1 à 4, de manière que $1 \leqq n + p \leqq 8$.

**5.** Procédé selon l'une quelconque des revendications 1 à 4, dans lequel on ajoute des ions sulfites ou un composé capable de libérer des ions sulfites à la solution pendant ou avant chauffage de la solution.

**6.** Procédé selon la revendication 5, dans lequel la solution contient les ions sulfites en une quantité d'au moins $5 \times 10^{-4}$ ion-gramme/litre.

**7.** Procédé selon la revendication 5 ou 6, dans lequel le composé capable de libérer des ions sulfites est au moins un composé choisi parmi
$K_2SO_3$, $Na_2SO_3$, $(NH_4)_2SO_3$, $NaHSO_3$, $KHSO_3$, $Na_2S_2O_5$, $K_2S_2O_5$;
les composés d'addition de bisulfite de formule (I) ou (II):

Formule (I)

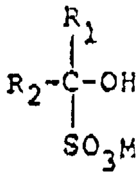

dans laquelle $R_1$ est un atome d'hydrogène ou un groupe alcoyle ayant de 1 à 8 atomes de carbone, $R_2$ est un groupe alcoyle ayant de 1 à 8 atomes de carbone et M est un métal alcalin ou un groupe ammonium;

Formule (II)

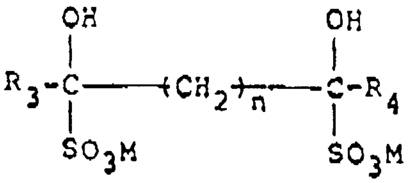

dans laquelle $R_3$ et $R_4$ représentent chacun indépendamment un atome d'hydrogène ou un groupe alcoyle ayant de 1 à 8 atomes de carbone, M est un métal alcalin ou un groupe ammonium et n est un nombre entier allant de 0 à 6; et
les composés de formule (A):

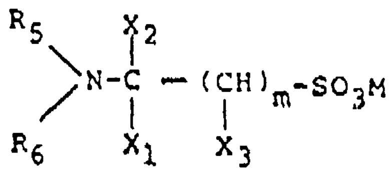

dans laquelle $R_5$ et $R_6$ représentent chacun indépendamment un atome d'hydrogène, un groupe alcoyle éventuellement substitué, un groupe acyle éventuellement substitué ou un groupe carbamoyle éventuellement substitué, ou $R_5$ et $R_6$ sont liés ensemble pour former, avec l'atome d'azote auquel ils sont attachés, un cycle.

**8.** Procédé selon l'une quelconque des revendications 1 à 4, dans lequel on met en contact du gaz évaporé à partir de la solution avec un catalyseur qui est un métal de (8) à (d) ou un de leurs composés :

(a) au moins un élément du groupe VIII choisi parmi le fer, le cobalt, le nickel, le ruthénium, le rhodium, le palladium, l'osmium, l'iridium et le platine;
(b) le cuivre;
(c) le zinc; et
(d) le manganèse.

**9.** Procédé selon la revendication 8, dans lequel le métal est au moins un métal choisi parmi le platine, le palladium, le rhodium et l'iridium.

**10.** Procédé selon la revendication 8 ou 9, dans lequel le composé de métal est au moins un composé choisi parmi les oxydes et les chlorures du métal, l'acide chloroaurique, l'hexachloroplatine, le chlorure de rhodium et le formiate de nickel.

**11.** Procédé selon l'une quelconque des revendications 8 à 10, dans lequel le catalyseur est porté par un support choisi parmi $Al_2O_3$ , $SiO_2$ et $ZrO_2$ .

**12.** Procédé selon l'une quelconque des revendications 8 à 11, dans lequel la température de contact avec le catalyseur est de 20 à 400 ° C.

**13.** Procédé selon l'une quelconque des revendications 1 à 4, dans lequel un polymère soluble dans l'eau est présent dans la solution.

**14.** Procédé selon la revendication 13, dans lequel le polymère soluble dans l'eau a un degré de polymérisation allant de 30 à 10 000 et est présent en une quantité allant de 0,01 à 300 g par litre de la solution.

**15.** Procédé selon la revendication 13 ou 14, dans lequel le polymère soluble dans l'eau est un composé ayant des groupes OH ou des groupes CO.

**16.** Procédé selon la revendication 15, dans lequel le polymère soluble dans l'eau est un composé de type polyvinyl-pyrrolidone, un alcool polyvinylique, de la gélatine, un composé de cellulose ou un copolymère isobutylène-anhydride maléique.

**17.** Procédé selon l'une quelconque des revendications 1 à 4, dans lequel un agent oxydant capable d'oxyder des ions thiosulfates est présent dans la solution.

**18.** Procédé selon la revendication 17, dans lequel l'agent oxydant est au moins un agent choisi parmi les peroxydes, les acides halogéniques et les oxydes métalliques.

**19.** Procédé selon la revendication 18, dans lequel le peroxyde est le persulfate de sodium, le persulfate de potassium, le persulfate d'ammonium, le peroxyde d'hydrogène, le peroxomonosulfate de sodium,

le peroxomonosulfate de potassium, le peroxomonosulfate d'ammonium, le percarbonate de potassium, le percarbonate de sodium, le perborate d'ammonium, le perborate de potassium, le perborate de sodium, le perborate de magnésium, le peroxyde de benzoyle, l'acide: peracétique, le peroxyde de calcium, le peroxyde de sodium, le peroxyde de baryum, le peroxyde de manganèse ou le peroxyde de lithium.

**20.** Procédé selon les revendications 18 à 19, dans lequel l'acide halogénique est l'acide perchlorique, le perchlorate de potassium, le perchlorate de sodium, le perchlorate de baryum, le perchlorate de magnésium, le chlorate de potassium, le chlorate de sodium, le bromate de potassium, l'iodate de potassium, l'iodate acide de potassium ou l'iodate de sodium.

**21.** Procédé selon l'une quelconque des revendications 18 à 20, dans lequel l'oxyde métallique est au moins un oxyde parmi $Fe_2O_3$ , $Fe_3O_4$ , $FeO$ , $ZnO$ , $NiO$ , $CuO$ , $MnO_2$ , $KMnO_4$ , $Cu_2O$ , $Pb_3O_4$ , $SnO$ , $Bi_2O_3$ , $CoO$ , $Cr_2O_3$ , $K_2Cr_2O_7$ , $KCrO_4$ , $Ce_2O_3$ , $TiO_2$ et $ZrO_2$ .

**Patentansprüche**

**1.** Verfahren zum Konzentrieren einer mindestens Thiosulfationen enthaltenden photographischen Ablauge durch Verdampfen, umfassend Erhitzen der Lösung und Zufügen eines pH-Kontrollagens zur Lösung, um den pH der Lösung von 3,0 bis 11,0 zu halten.

**2.** Verfahren nach Anspruch 1, worin die Lösung Silber enthält.

**3.** Verfahren nach Anspruch 1 oder 2, worin der pH der Lösung von 4,0 bis 8,0 gehalten wird.

**4.** Verfahren nach einem der Ansprüche 1 bis 3, weiterhin umfassend das Eintragen einer Verbindung ausgewählt aus den Formeln (V) bis (VIII) in die Ablauge vor oder während des Erhitzens:

Formel (V)

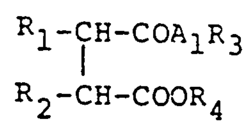

worin einer der Reste $R_1$ und $R_2$ ein Wasserstoffatom und der andere eine Gruppe der Formel $-SO_3M$ ist, worin M ein Wasserstoffatom oder ein einwertiges Kation ist; $A_1$ ist ein Sauerstoffatom oder eine Gruppe der Formel $-NR_5$, worin $R_5$ ein Wasserstoffatom oder eine Alkylgruppe mit 1 bis 8 Kohlenstoffatomen, die gegebenenfalls durch ein Fluoratom substituiert ist; und $R_3$ und $R_4$ jeweils unabhängig voneinander Alkylgruppen mit 4 bis 16 Kohlenstoffatomen, die gegebenenfalls fluorsubstituiert sind;
Formel (VI)

$A_2-O-(B)_m-X_1$

worin $A_2$ eine einwertige organische Gruppe ist, B ein Ethylenoxid- oder Propylenoxidrest; m eine ganze Zahl von 4 bis 50 und $X_1$ ein Wasserstoffatom, $SO_3Y$ oder $PO_3Y_2$, worin Y ein Wasserstoffatom, ein Alkalimetallatom oder ein Ammoniumion ist;

Formel (VII)

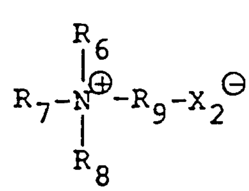

worin $R_6$, $R_7$, $R_8$ und $R_9$ jeweils unabhängig voneinander ein Wasserstoffatom, eine Alkylgruppe oder eine Phenylgruppe sind, mit der Maßgabe, daß die Gesamtzahl an Kohlenstoffatomen in $R_6$, $R_7$, $R_8$ und $R_9$ 3 bis 50 beträgt und $Y_2^-$ ein Anion ist;

Formel (VIII)

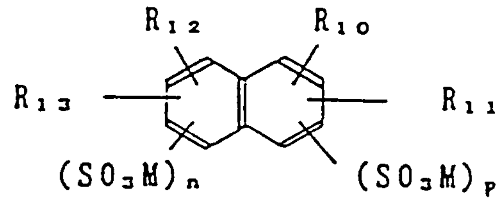

worin $R_{10}$, $R_{11}$, $R_{12}$ und $R_{13}$ jeweils unabhängig voneinander ein Wasserstoffatom oder eine Alkylgruppe sind; M ein Wasserstoffatom oder ein einwertiges Kation ist, und n und p jeweils unabhängig voneinander 0 oder eine ganze Zahl von 1 bis 4 sind, sodaß $1 \leqq n + p \leqq 8$.

5. Verfahren nach einem der Ansprüche 1 bis 4, worin der Lösung während oder vor dem Erhitzen Sulfitionen oder eine Verbindung, die Sulfitionen freisetzen kann, zugefügt werden.

6. Verfahren nach Anspruch 5, worin die Lösung die Sulfitionen in einer Menge von $5 \times 10^{-4}$ g Ion/l enthält.

7. Verfahren nach Anspruch 5 oder 6, worin die Verbindung, die Sulfitionen freisetzen kann, mindestens eine ist ausgewählt aus der Gruppe
$K_2SO_3$, $Na_2SO_3$, $(NH_4)_2SO_3$, $NaHSO_3$, $KHSO_3$, $Na_2S_2O_5$, $K_2S_2O_5$;
Bisulfitadditionsverbindungen der Formel (I) oder (II):

Formel (I)

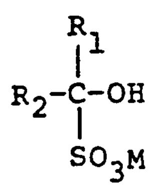

worin $R_1$ ein Wasserstoffatom ist oder eine Alkylgruppe mit 1 bis 8 Kohlenstoffatomen, $R_2$ eine Alkylgruppe mit 1 bis 8 Kohlenstoffatomen und M ein Alkalimetall oder eine Ammoniumgruppe ist;

Formel (II)

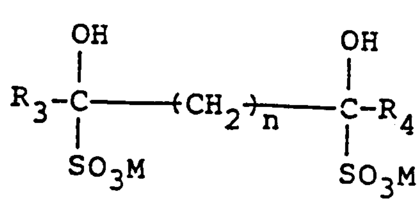

worin $R_3$ und $R_4$ jeweils unabhängig voneinander ein Wasserstoffatom oder eine Alkylgruppe mit 1 bis 8 Kohlenstoffatomen sind, M ein Alkalimetall oder eine Ammoniumgruppe ist und n eine ganze Zahl von 0 bis 6 ist; und

Verbindungen der Formel (A):

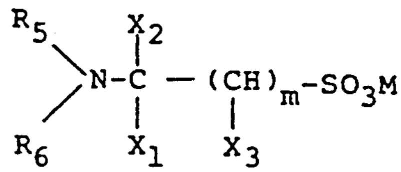

worin $R_5$ und $R_6$ jeweils unabhängig voneinander ein Wasserstoffatom sind, eine gegebenenfalls substituierte Alkylgruppe, eine gegebenenfalls substituierte Acylgruppe, oder eine gegebenenfalls substituierte Carbamoylgruppe, oder $R_5$ und $R_6$ miteinander verbunden sind, um zusammen mit dem Stickstoffatom, an das sie gebunden sind, einen Ring zu bilden.

**8.** Verfahren nach einem der Ansprüche 1 bis 4, worin aus der Lösung verdampftes Gas mit einem Katalysator in Berührung gebracht wird, der ein Metall (a) bis (d) oder eine Verbindung desselben ist:
(a) mindestens ein Element der Gruppe VIII, ausgewählt aus Eisen, Kobalt, Nickel, Ruthenium, Rhodium, Palladium, Osmium, Iridium und Platin;
(b) Kupfer;
(c) Zink; und
(d) Mangan.

**9.** Verfahren nach Anspruch 8, worin das Metall mindestens eines ausgewählt aus Platin, Palladium, Rhodium und Iridium ist.

**10.** Verfahren nach Anspruch 8 oder 9, worin die Metallverbindung mindestens eine ist ausgewählt aus Oxiden und Chloriden des Metalls, Chlorogoldsäure, Hexachlorplatin, Rhodiumchlorid und Nickelformiat.

**11.** Verfahren nach einem der Ansprüche 8 bis 10, worin der Katalysator von einem Träger ausgewählt aus $Al_2O_3$, $SiO_2$ und $ZrO_2$ getragen wird.

**12.** Verfahren nach einem der Ansprüche 8 bis 11, worin die Kontakttemperatur mit dem Katalysator 20 °C bis 400 °C beträgt.

**13.** Verfahren nach einem der Ansprüche 1 bis 4, worin ein wasserlösliches Polymer in der Lösung vorhanden ist.

**14.** Verfahren nach Anspruch 13, worin das wasserlösliche Polymer einen Polymerisationsgrad von 30 bis 10000 aufweist und in einer Menge von 0,01 bis 300 g pro Liter Lösung vorhanden ist.

**15.** Verfahren nach Anspruch 13 oder 14, worin das wasserlösliche Polymer eine Verbindung mit OH-Gruppen oder CO-Gruppen ist.

**16.** Verfahren nach Anspruch 15, worin das wasserlösliche Polymer eine Verbindung vom Polyvinylpyrrolidontyp, ein Polyvinylalkohol, Gelatine, eine Celluloseverbindung oder ein Isobutylenmaleinsäureanhydrid-Copolymer ist.

**17.** Verfahren nach einem der Ansprüche 1 bis 4, worin ein Oxidationsmittel, das Thiosulfationen oxidieren kann, in der Lösung vorhanden ist.

**18.** Verfahren nach Anspruch 17, worin das Oxidationsmittel mindestens eines ausgewählt aus Peroxiden, Halogensäuren und Metalloxiden ist.

**19.** Verfahren nach Anspruch 18, worin das Peroxid Natriumpersulfat, Kaliumpersulfat, Ammoniumpersulfat, Wasserstoffperoxid, Natriumperoxomonosulfat, Kaliumperoxomonosulfat, Ammoniumperoxomonosulfat, Kaliumpercarbonat, Natriumpercarbonat, Ammoniumperborat, Kaliumperborat, Natriumperborat, Magnesiumperborat, Benzoylperoxid, Peressigsäure, Kalziumperoxid, Natriumperoxid, Bariumperoxid, Manganperoxid oder Lithiumperoxid ist.

**20.** Verfahren nach Anspruch 18 bis 19, wobei die Halogensäure Perchlorsäure, Kaliumperchlorat, Natriumperchlorat, Bariumperchlorat, Magnesiumperchlorat, Kaliumchlorat, Natriumchlorat, Kaliumbromat, Kaliumiodat, Kaliumhydrogeniodat oder Natriumiodat ist.

**21.** Verfahren nach einem der Ansprüche 18 bis 20, worin das Metalloxid mindestens eines aus $Fe_2O_3$, $Fe_3O_4$, FeO, ZnO, NiO, CuO, $MnO_2$, $KMnO_4$, $Cu_2O$, $Pb_3O_4$, SnO, $Bi_2O_3$, CoO, $Cr_2O_3$, $K_2Cr_2O_7$, $KCrO_4$, $Ce_2O_3$, $TiO_2$ und $ZrO_2$.

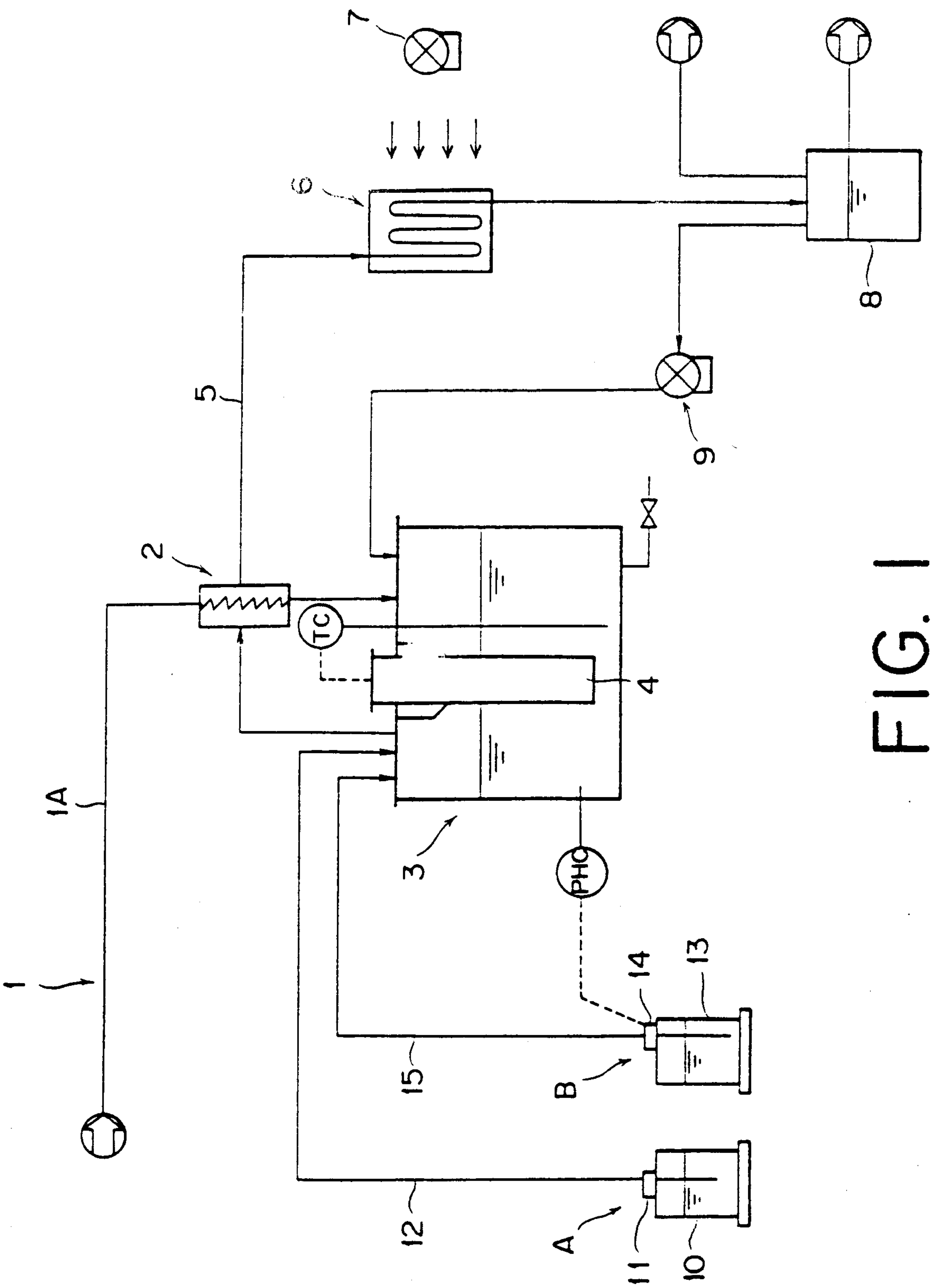


FIG. 1

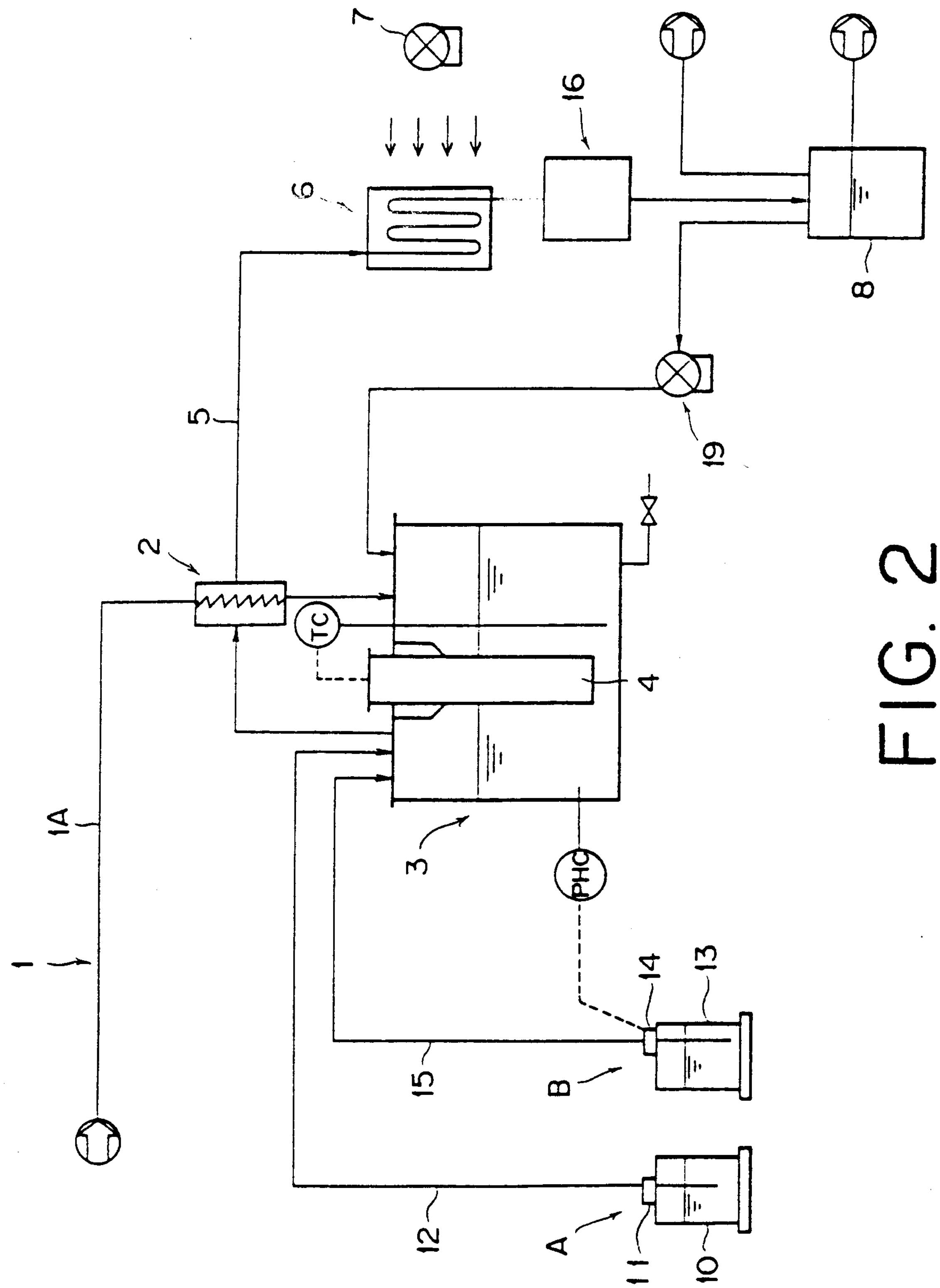


FIG. 2

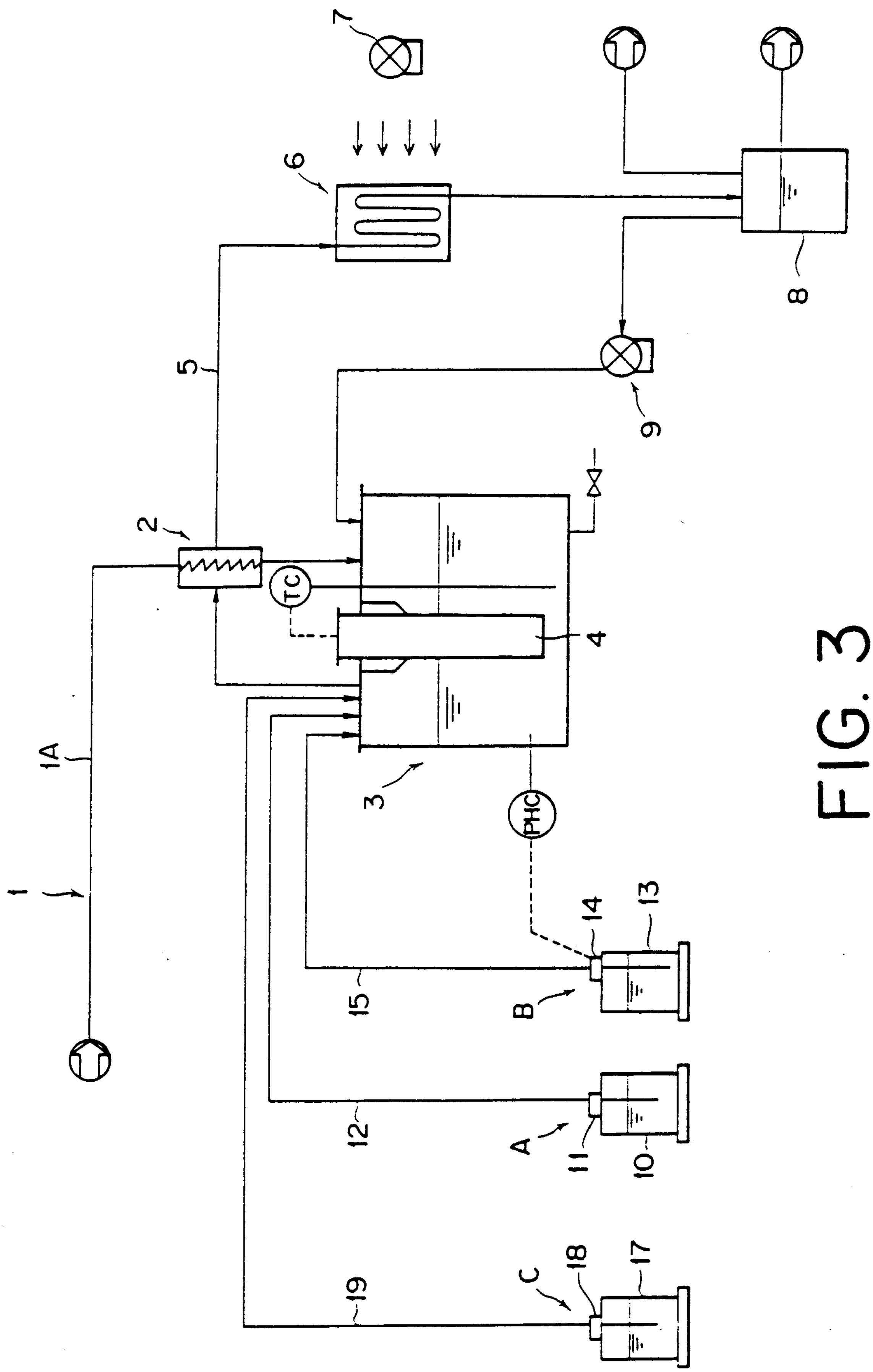


FIG. 3

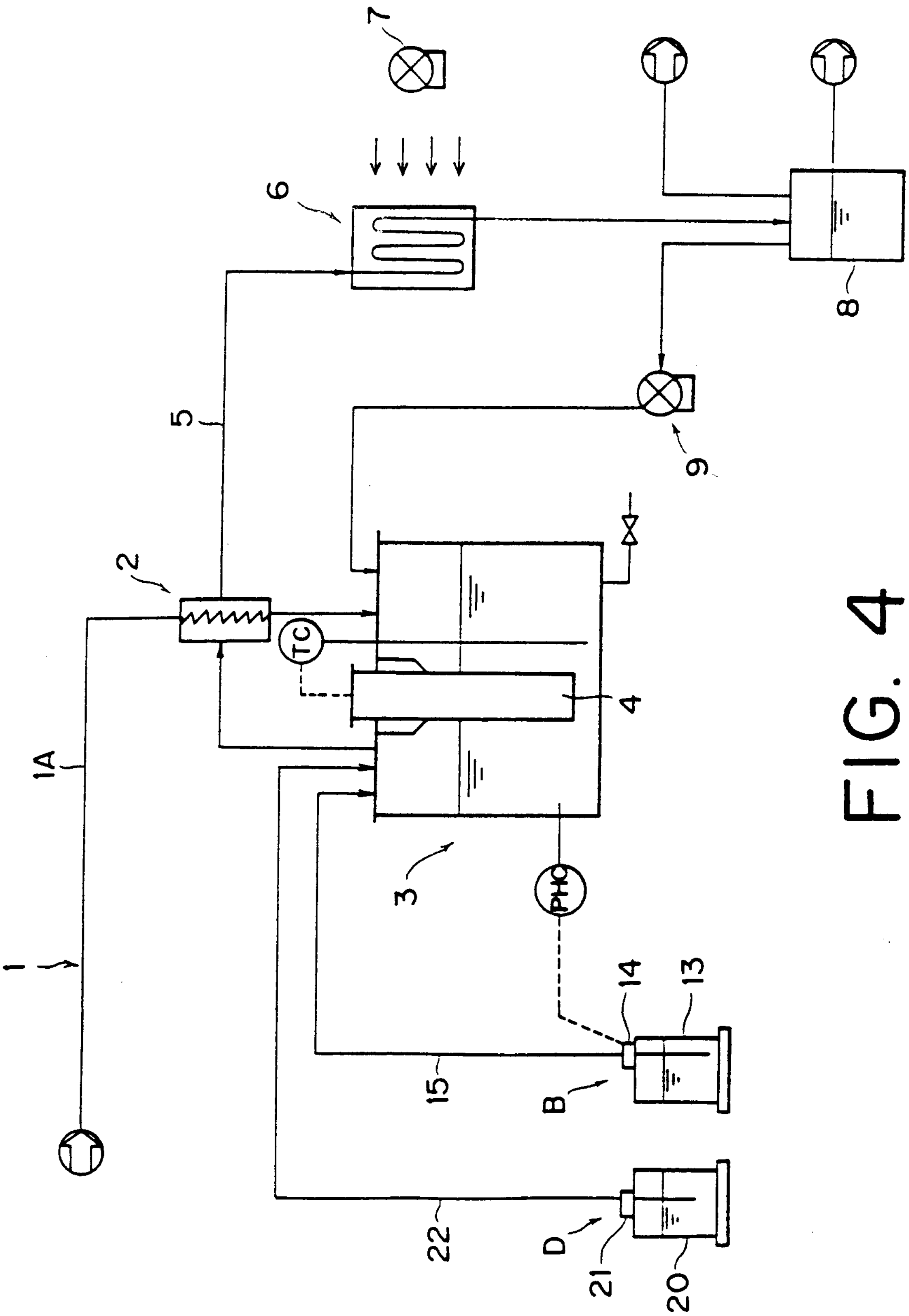


FIG. 4

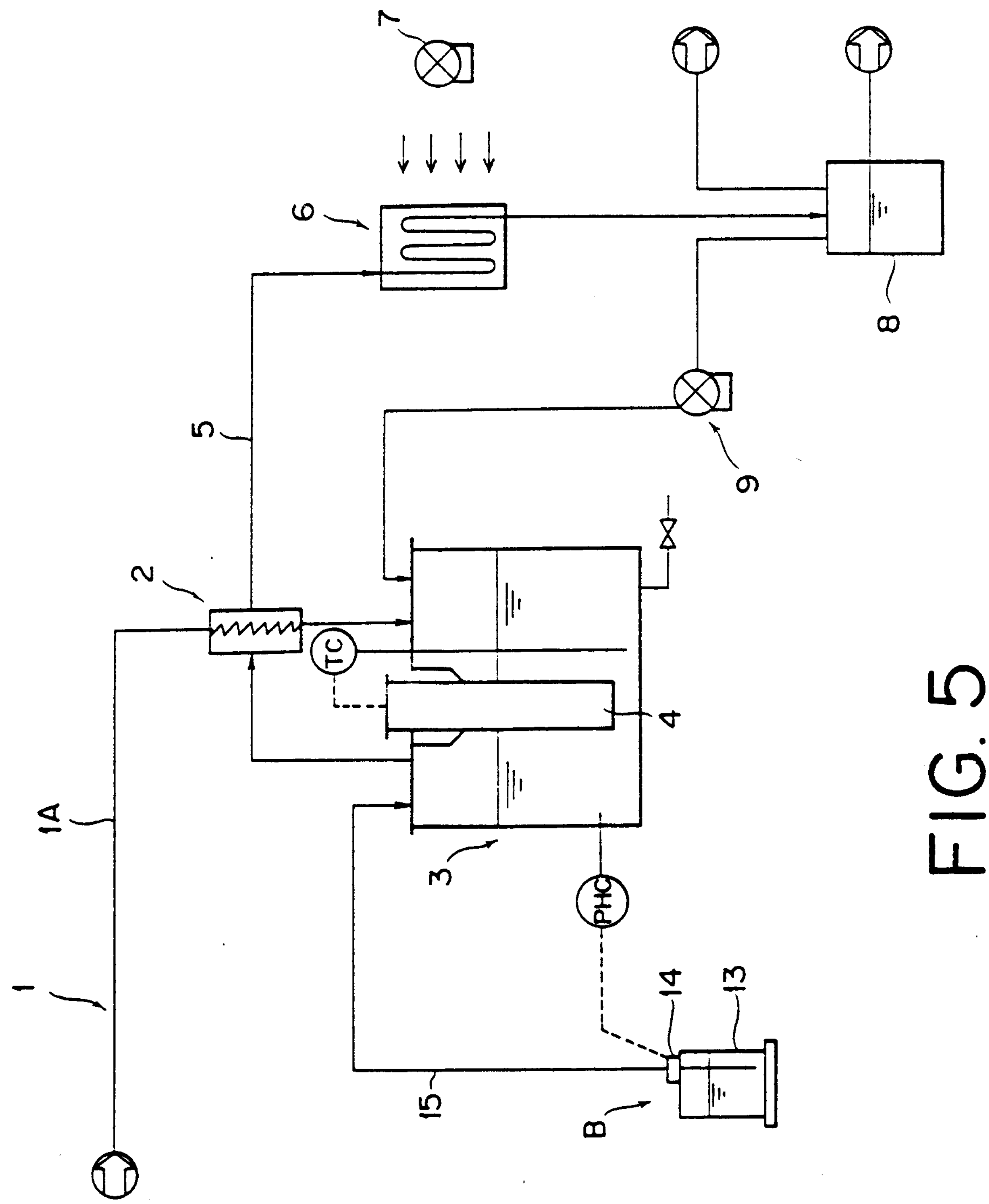


FIG. 5